# EUROPEAN PATENT SPECIFICATION

(11) **EP 4 390 631 B1**
(45) Date of publication and mention of the grant of the patent: **27.05.2026**
(21) Application number: 23807074.2
(22) Date of filing: 19.05.2023
(51) Int. Cl.: G06F 3/01

(54) **METHOD AND APPARATUS FOR OPENING FLOATING NOTIFICATIONS**
VERFAHREN UND VORRICHTUNG ZUM ÖFFNEN VON SCHWEBENDEN BENACHRICHTIGUNGEN
PROCÉDÉ ET APPAREIL D'OUVERTURE DE NOTIFICATIONS FLOTTANTES

(30) Priority: 20.05.2022 CN 202210549604; 20.05.2022 CN 202210549347; 30.06.2022 CN 202210764445; 30.06.2022 CN 202210761048; 27.02.2023 CN 202310226969; 27.02.2023 CN 202310216799
(43) Date of publication of application: 26.06.2024
(73) Proprietor: Honor Device Co., Ltd., Shenzhen, Guangdong 518040 (CN)
(72) Inventor: LI, Zhaoying, Shenzhen, Guangdong 518040 (CN); HUANG, Liwei, Shenzhen, Guangdong 518040 (CN); QIAN, Kai, Shenzhen, Guangdong 518040 (CN)
(74) Representative: Epping - Hermann - Fischer
(86) International application number: PCT/CN2023/095373
(87) International publication number: WO 2023/222125

(56) References cited:
- EP-A2- 2 762 997
- CN-A- 106 951 093
- CN-A- 107 608 514
- CN-A- 109 814 723
- CN-A- 110 825 226
- US-A1- 2012 300 061
- US-A1- 2014 049 452
- US-A1- 2017 285 737
- US-A1- 2017 293 352
- US-A1- 2020 237 256

## Description

This application claims priority to Chinese Patent Application No. 202210549604.6, filed with the China National Intellectual Property Administration on May 20, 2022 and entitled "DISPLAY METHOD AND ELECTRONIC DEVICE", to Chinese Patent Application No. 202210549347.6, filed with the China National Intellectual Property Administration on May 20, 2022 and entitled "DISPLAY METHOD AND ELECTRONIC DEVICE", to Chinese Patent Application No. 202210761048.9, filed with the China National Intellectual Property Administration on June 30, 2022 and entitled "DISPLAY METHOD AND ELECTRONIC DEVICE", to Chinese Patent Application No. 202210764445.1, filed with the China National Intellectual Property Administration on June 30, 2022 and entitled "DISPLAY METHOD AND ELECTRONIC DEVICE", to Chinese Patent Application No. 202310216799.7, filed with the China National Intellectual Property Administration on February 27, 2023 and entitled "CALIBRATION METHOD AND APPARATUS", and to Chinese Patent Application No. 202310226969.X, filed with the China National Intellectual Property Administration on February 27, 2023 and entitled "BANNER NOTIFICATION OPENING METHOD AND APPARATUS".

### TECHNICAL FIELD

This application relates to the field of terminal technologies, and in particular, to a banner notification opening method and an apparatus.

### BACKGROUND

With the development of terminal technologies, functional requirements of users for terminal devices are becoming increasingly diversified. For example, the users may interact with the terminal devices to control the terminal devices.

Generally, when receiving a message, the terminal device may display, in an upper region of a display, a banner notification corresponding to the message, so that the user senses a message content change in time. Further, when receiving a trigger operation performed by the user on the banner notification, the terminal device may open the banner notification, for example, expand the banner notification and/or open an application interface corresponding to the banner notification.

However, in many scenarios, it is difficult for the user to trigger the banner notification in the upper region of the display.

EP 2 762 997 A2 relates to a method for providing a graphic interface. The method includes the steps displaying a set of interface tiles on a display device, detecting a location of a user's gaze, identifying that a user is looking at one tile of the set of interface tiles for a set period of time, displaying a expansion tile along with the set of interface tiles, the expansion tile comprises additional content associated with an identified tile of the set of interface tiles that the user is looking at.

US 2012/300061 A1 relates to methods, devices, and computer programs for controlling behavior of an electronic device. A method includes an operation for operating the electronic device in a first mode of operation, and an operation for tracking the gaze of a user interfacing with the electronic device. The electronic device is maintained in a first mode of operation as long as the gaze is directed towards a predetermined target. In another operation, when the gaze is not detected to be directed towards the predetermined target, the electronic device is operated in a second mode of operation, which is different from the first mode of operation.

US 2020/237256 A1 relates to a method for supporting medical interventions using an augmented reality system, which comprises determining, using a position marker and an electronic tracking system, positions of a set of points; calculating a geometric shape using the determined positions of the set of points; and displaying, on an optical head mounted display the calculated geometric shape in the field of view of a bearer of the display.

US 2017/285737 A1 relates to an exemplary virtual reality media system presenting a field of view of an immersive virtual reality world on a display screen of a media player device associated with a user. The field of view includes content of the immersive virtual reality world and dynamically changes in response to user input provided by the user as the user experiences the immersive virtual reality world. Additionally, the virtual reality media system detects that a gaze of the user is directed for a predetermined amount of time at a gaze target included within the field of view. In response to the detection, the virtual reality media system presents an interactive user interface associated with the gaze target.

US 2014/049452 A1 relates to a software controlled user interface and calibration method for an eye gaze controlled device, designed to accommodate angular accuracy versus time averaging tradeoffs for eye gaze direction sensors. The method can scale between displaying a small to large number of different eye gaze target symbols at any given time, yet still transmit a large array of different symbols to outside devices with minimal user training.

### SUMMARY

Embodiments of this application provide a banner notification opening method and apparatus, to simplify a manner of opening a banner notification in an upper region of a display. The invention is set out in the appended claims.

It should be understood that the second aspect to the fifth aspect of this application correspond to the technical solutions in the first aspect of this application, and the beneficial effects obtained in the aspects and the corresponding feasible implementations are similar. Details are not described herein again.

### BRIEF DESCRIPTION OF DRAWINGS

FIG. 1A, FIG. 1B, and FIG. 1C are a schematic diagram of a scenario according to an embodiment of this application;
FIG. 2 is a schematic diagram of a hardware structure of a terminal device according to an embodiment of this application;
FIG. 3A, FIG. 3B, FIG. 3C, and FIG. 3D are a schematic diagram of an interface of recommending an eye tracking function according to an embodiment of this application;
FIG. 4A, FIG. 4B, and FIG. 4C are a schematic diagram of another interface of recommending an eye tracking function according to an embodiment of this application;
FIG. 5A, FIG. 5B, FIG. 5C, FIG. 5D, FIG. 5E, and FIG. 5F are a schematic diagram of a banner notification opening interface according to an embodiment of this application;
FIG. 6A and FIG. 6B are a schematic diagram of another banner notification opening interface according to an embodiment of this application;
FIG. 7A, FIG. 7B, FIG. 7C, and FIG. 7D are a schematic diagram of still another banner notification opening interface according to an embodiment of this application;
FIG. 8A, FIG. 8B, FIG. 8C, FIG. 8D, and FIG. 8E are a schematic diagram of yet another banner notification opening interface according to an embodiment of this application;
FIG. 9A, FIG. 9B, FIG. 9C, FIG. 9D, and FIG. 9E are a schematic diagram of an interface on which a gaze cursor disappears according to an embodiment of this application;
FIG. 10A, FIG. 10B, FIG. 10C, and FIG. 10D are a schematic diagram of a banner notification opening procedure according to an embodiment of this application;
FIG. 11 is a schematic diagram of a structure of a banner notification opening apparatus according to an embodiment of this application; and
FIG. 12 is a schematic diagram of a hardware structure of another terminal device according to an embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. For example, a first value and a second value are merely used to distinguish between different values, and are not intended to limit a sequence thereof. A person skilled in the art may understand that the terms such as "first" and "second" do not limit a quantity and an execution sequence, and the terms such as "first" and "second" unnecessarily define a difference.

It should be noted that, in this application, the term such as "example" or "for example" is used to represent giving an example, an illustration, or a description. Any embodiment or design scheme described as an "example" or "for example" in this application should not be construed as being more preferred or more advantageous than another embodiment or design scheme. In particular, the term such as "example" or "for example" as used herein is intended to present a related concept in a specific manner.

In this application, "at least one" indicates one or more, and "a plurality of" indicates two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates that the associated objects are in an "or" relationship. "At least one of the following items" or a similar expression thereof indicates any combination of these items, including a single item or any combination of a plurality of items. For example, at least one of a, b, or c may represent a, b, c, a and b, a and c, b and c, or a, b, and c, where a, b, and c may be singular or plural.

An expandable banner notification may be a banner notification that is allowed to be expanded. For example, a terminal device may display a banner notification, and the banner notification may include a control used to expand the banner notification. When the terminal device receives an operation performed by the user on the control for expanding the banner notification, the terminal device displays the expanded banner notification. Message content in the expanded banner notification is more than message content in the unexpanded banner notification.

An unexpandable banner notification may be a banner notification that is not allowed to be expanded. For example, a terminal device may display a banner notification. When the terminal device receives a trigger operation performed by a user in any position in the banner notification, the terminal device opens an application interface corresponding to the banner notification. The application interface includes message content in the banner notification. The unexpandable banner notification does not include the control used to expand the banner notification.

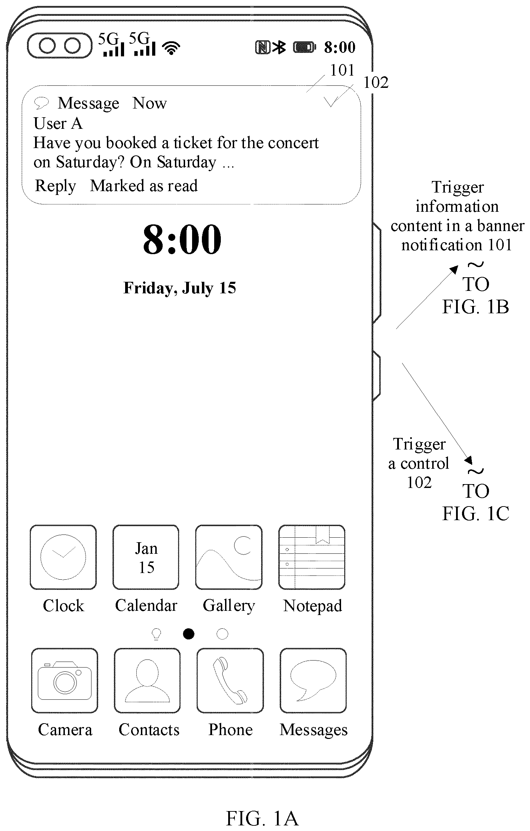

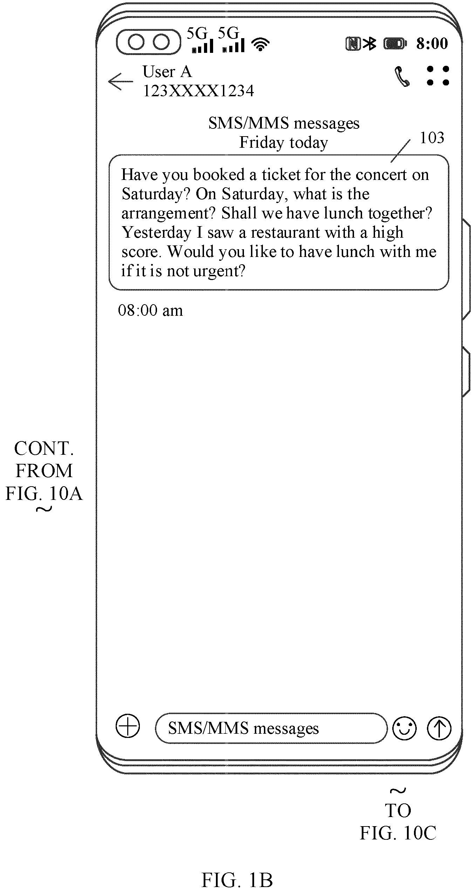

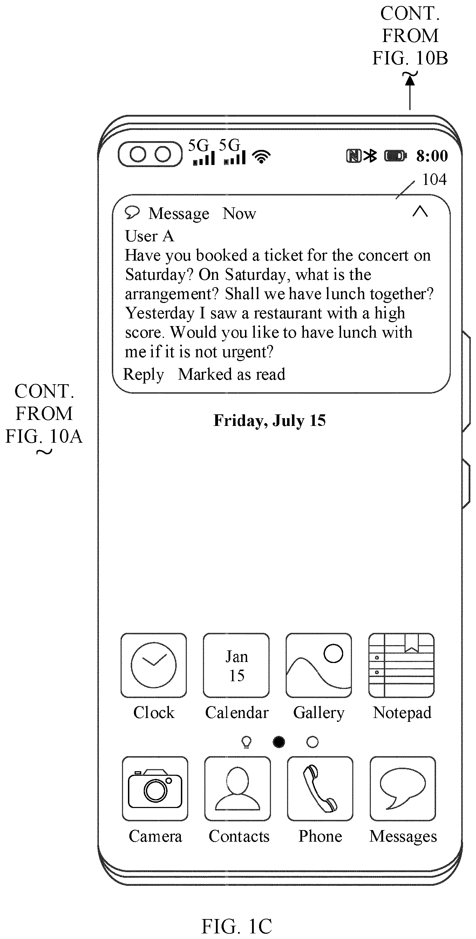

For example, FIG. 1A, FIG. 1B, and FIG. 1C are a schematic diagram of a scenario according to an embodiment of this application. In the embodiment corresponding to FIG. 1A, FIG. 1B, and FIG. 1C, an example in which a terminal device is a mobile phone and a banner notification is a banner notification sent by a Messages application is used for description. This example does not constitute a limitation on this embodiment of this application.

When the terminal device receives any message, the terminal device may display an interface shown in FIG. 1A. The interface may include a banner notification 101. The banner notification 101 may include one or more of the following: message content, a control 102 used to expand the banner notification, a control used to reply to the message, or a control used to mark the message as read. The message content may be sent by a user A. The message content may be displayed as "Have you booked a ticket for the concert on Saturday? On Saturday ...". It may be understood that the banner notification 101 may include the control 102 when the banner notification 101 is allowed to be expanded.

The interface shown in FIG. 1A may be a home screen of the terminal device, or may be another interface. The Clock application, the Calendar application, the Gallery application, the Notepad application, the Camera application, the Contacts application, the Phone application, the Messages application, and the like may be displayed on the home screen. In this embodiment of this application, content displayed on the home screen of the terminal device and an interface covered by the banner notification 101 are not specifically limited.

On the interface shown in FIG. 1A, when the terminal device receives a trigger operation performed by the user on the message content in the expanded banner notification 101, the terminal device may display an interface shown in FIG. 1B. On the interface shown in FIG. 1B, the interface may be a Messages application interface corresponding to the banner notification 101. The interface may include information 103. Complete information content may be displayed in the information 103. The complete information content may be "Have you booked a ticket for the concert on Saturday? On Saturday, what is the arrangement? Shall we have lunch together? Yesterday I saw a restaurant with a high score. Would you like to have lunch with me if it is not urgent?". Further, the user may reply to the message on the interface shown in FIG. 1B or view the complete message content.

On the interface shown in FIG. 1A, when the terminal device receives a trigger operation performed by the user on the control 102, the terminal device may display an interface shown in FIG. 1C. On the interface shown in FIG. 1C, the interface may include an expanded banner notification 104. Complete message content may be displayed in the expanded banner notification 104. The complete message content is consistent with the message content displayed on the interface shown in FIG. 1B. Details are not described herein again.

In a possible implementation, on the interface shown in FIG. 1C, when the terminal device receives a trigger operation performed by the user on the message content in the expanded banner notification 104, the terminal device may also display the interface shown in FIG. 1B. The unexpandable banner notification does not include the control 102. An application interface corresponding to the banner notification can be directly opened through tapping any position of the unexpandable banner notification.

For the foregoing two types of banner notifications, in a scenario in which it is inconvenient for the user to trigger the terminal device, it is difficult to flexibly expand the banner notification or open the application interface corresponding to the banner notification. The scenario in which it is inconvenient to trigger the terminal device may include a scenario such as a conference scenario, a mobile phone hold by a single hand, or a cooking scenario. An application corresponding to the banner notification may be understood as an application for sending the banner notification.

In view of this, an embodiment of this application provides a banner notification opening method, so that a terminal device can flexibly expand a banner notification and/or open an application interface corresponding to the banner notification when detecting that a gaze position (or referred to as a gaze point) of a user is in a region in which the banner notification is located.

It may be understood that, the foregoing terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a smart television, a wearable device, a tablet computer (Pad), a computer with wireless sending and receiving functions, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), and/or a wireless terminal in a smart home (smart home). A specific technology and a specific device form that are used by the terminal device are not limited in embodiments of this application.

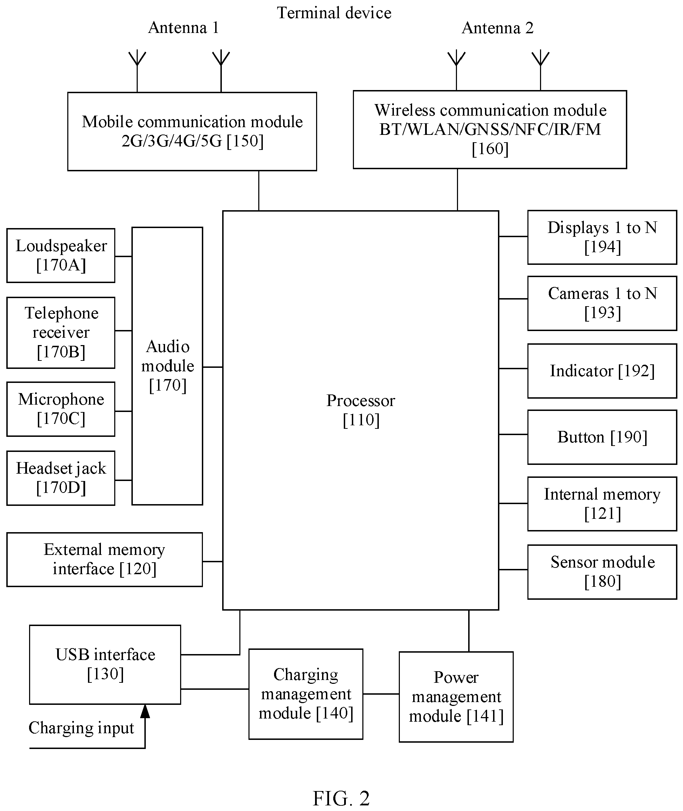

Therefore, to better understand embodiments of this application, the following describes a structure of the terminal device in embodiments of this application. For example, FIG. 2 is a schematic diagram of a hardware structure of a terminal device according to an embodiment of this application.

The terminal device may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a telephone receiver 170B, a microphone 170C, a headset jack 170D, a sensor module 180, a button 190, an indicator 192, a camera 193, a display 194, and the like.

The sensor module 180 may include one or more of the following: for example, a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, or a bone conduction sensor.

It may be understood that the structure illustrated in this embodiment of this application does not constitute a specific limitation on the terminal device. In some other embodiments of this application, the terminal device may include more or fewer components than those shown in the figure, or some components may be combined, or some components may be split, or different component arrangements may be used. The components in the figure may be implemented by hardware, software, or a combination of software and hardware.

The processor 110 may include one or more processing units. Different processing units may be separate devices, or may be integrated into one or more processors. The processor 110 may be further provided with a memory configured to store instructions and data.

The USB interface 130 is an interface that conforms to a USB standard specification, and may be specifically a Mini USB interface, a Micro USB interface, a USB Type C interface, or the like. The USB interface 130 may be configured to connect to a charger to charge the terminal device, or may be configured to transmit data between the terminal device and a peripheral device, or may be configured to connect to a headset to play audio through the headset. The interface may be alternatively configured to connect to another device, for example, an AR device.

The charging management module 140 is configured to receive a charging input from the charger. The charger may be a wireless charger, or may be a wired charger. The power management module 141 is configured to connect to the charging management module 140 and the processor 110.

A wireless communication function of the terminal device may be implemented by using the antenna 1, the antenna 2, the mobile communication module 150, the wireless communication module 160, a modem, a baseband processor, and the like.

The antenna 1 and the antenna 2 are configured to transmit and receive electromagnetic wave signals. An antenna in the terminal device may be configured to cover one or more communication frequency bands. Different antennas may be multiplexed to improve utilization of the antennas.

The mobile communication module 150 may provide a solution to wireless communication such as 2G/3G/4G/5G applied to the terminal device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem for demodulation. The wireless communication module 160 may provide a solution to wireless communication including a wireless local area network (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), and the like applied to the terminal device.

The modem may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator sends the low-frequency baseband signal obtained through demodulation to the baseband processor for processing. The low-frequency baseband signal is processed by the baseband processor and then sent to the application processor. The application processor outputs a sound signal through an audio device (that is not limited to a speaker, a telephone receiver, and the like), or displays an image or a video through the display 194. In some embodiments, the modem may be a separate device. In some other embodiments, the modem may be independent of the processor 110, and is disposed in a same device as the mobile communication module 150 or another functional module.

The terminal device may implement a display function by using the GPU, the display 194, the application processor, and the like. The GPU is a microprocessor for image processing and is connected to the display 194 and the application processor. The GPU is configured to perform mathematical and geometric calculations and graphics rendering.

The display 194 is configured to display an image, a video, or the like. The display 194 includes a display panel. In some embodiments, the terminal device may include one or N displays 194, where N is a positive integer greater than 1.

The terminal device may implement a photographing function by using an ISP, the camera 193, a video codec, the GPU, the display 194, the application processor, and the like.

The camera 193 is configured to capture a static image or a video. In some embodiments, the terminal device may include one or N cameras 193, where N is a positive integer greater than 1.

The external memory interface 120 may be configured to connect to an external storage card, for example, a Micro SD card, to extend a storage capability of the terminal device. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area.

The terminal device may implement an audio function, for example, music playback and recording, by using the audio module 170, the speaker 170A, the telephone receiver 170B, the microphone 170C, the headset jack 170D, the application processor, and the like.

The audio module 170 is configured to convert digital audio information into an analog audio signal for output, and is also configured to convert an analog audio input into a digital audio signal. The speaker 170A, also referred to as a "horn", is configured to convert an electrical audio signal into a sound signal. The terminal device may listen to music or answer a call in a hands-free mode by using the speaker 170A. The telephone receiver 170B, also referred to as an "earpiece", is configured to convert an audio electrical signal into a sound signal. When the terminal device receives a call or a voice message, the telephone receiver 170B can be placed close to an ear to receive the voice. The headset jack 170D is configured to connect to a wired headset. The microphone 170C, also referred to as a "mic" or "mike", is configured to convert a sound signal into an electrical signal. In this embodiment of this application, the terminal device may have one microphone 170C.

The button 190 includes a power button, a volume button, and the like. The button 190 may be a mechanical button, or may be a touch key. The terminal device may receive a button input and generate a button signal input related to user settings and function control of the terminal device. The indicator 192 may be an indicator light, may be configured to indicate a charging status or a power change, and may also be configured to indicate a message, a missed call, a notification, and the like.

In addition, an operating system, for example, an iOS operating system, an Android (android) operating system, or a Windows operating system, is further run on the foregoing components of the device. An application can be installed and run on the operating system.

A software system of the terminal device may use a layered architecture, an event-driven architecture, a microkernel architecture, a microservice architecture, a cloud architecture, or the like. Details are not described herein.

The following describes the technical solutions of this application and how to resolve the foregoing technical problems according to the technical solutions of this application in detail by using specific embodiments. The following several specific embodiments may be independently implemented, and may also be combined with each other, and the same or similar concepts or processes may not be described repeatedly in some embodiments.

The terminal device described in embodiments of this application may support an eye tracking function. The eye tracking function may be understood as follows: The terminal device tracks a position of a gaze point, and determines, through tracking the position of the gaze point, whether to expand a banner notification and/or open an application corresponding to the banner notification.

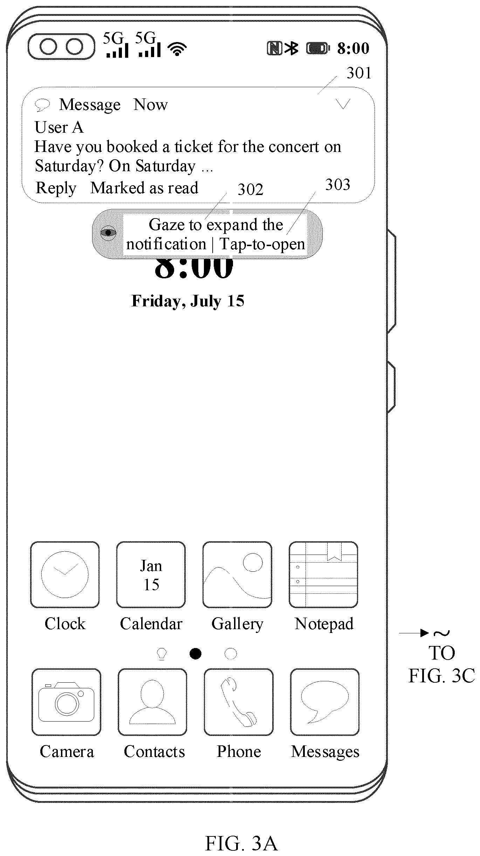

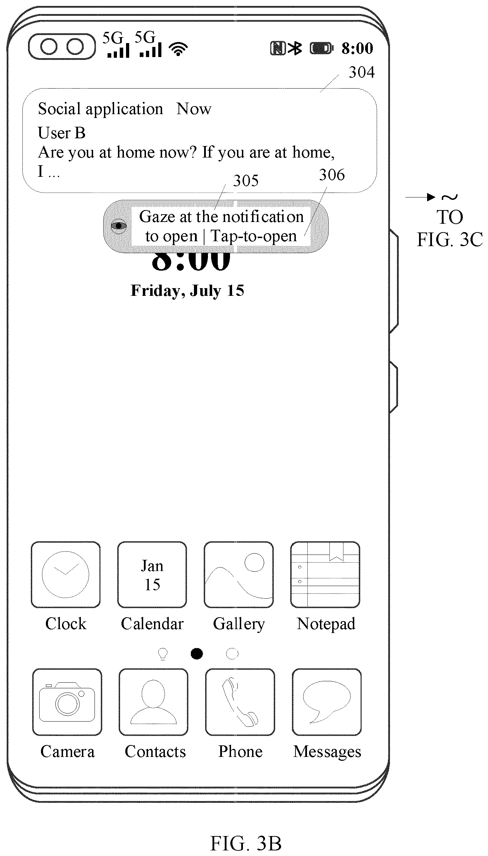

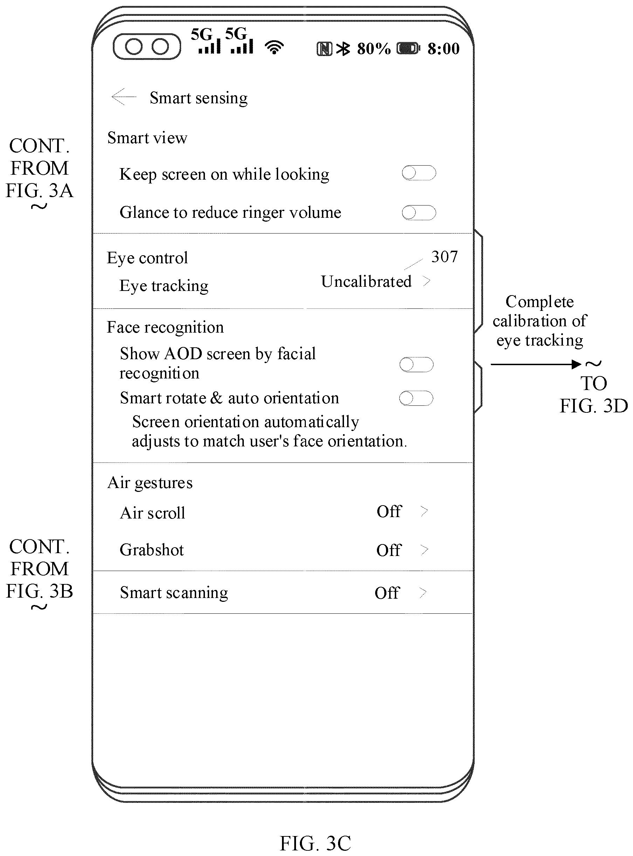

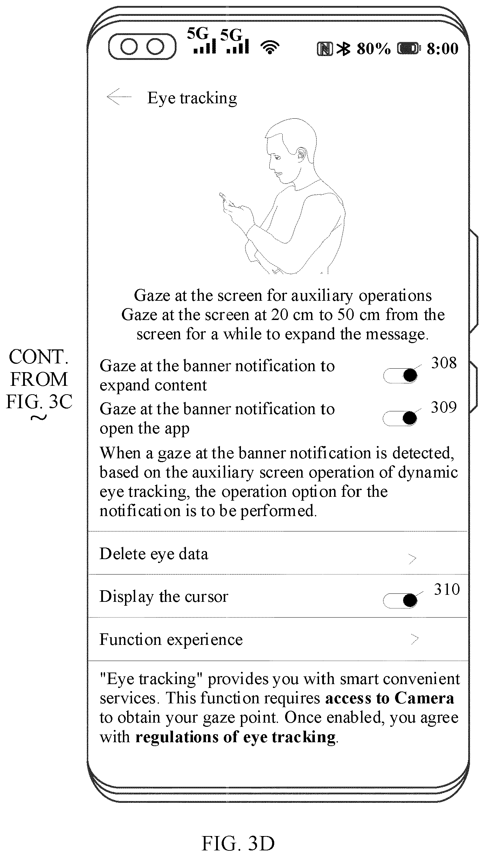

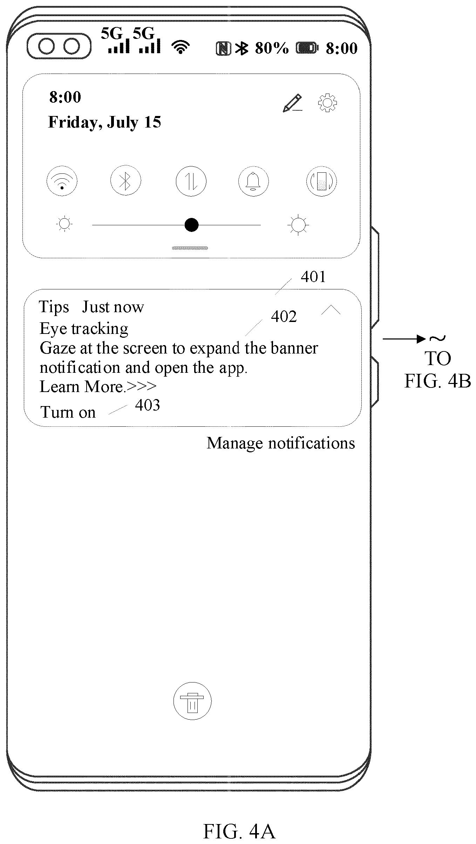

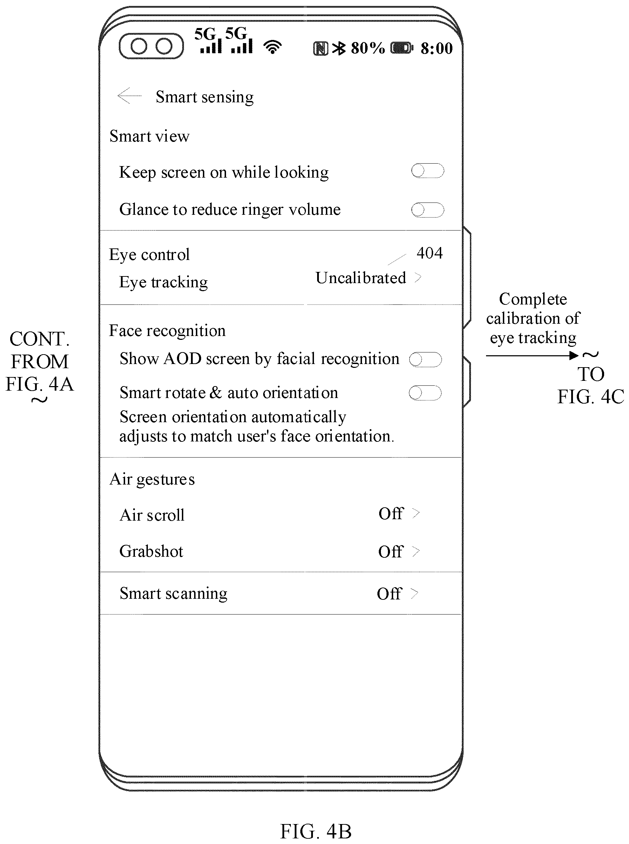

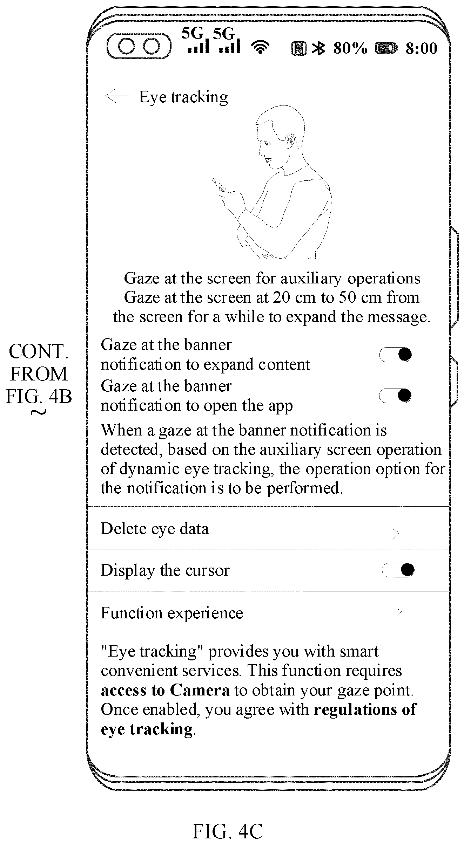

When receiving a banner notification for a first time and detecting that the eye tracking function is not enabled, the terminal device may recommend the eye tracking function by using a prompt capsule (refer to an embodiment corresponding to FIG. 3A, FIG. 3B, FIG. 3C, and FIG. 3D) and/or recommend the eye tracking function by using a gentle notification function of a notification bar (refer to an embodiment corresponding to FIG. 4A, FIG. 4B, and FIG. 4C).

Further, when the user does not enable the eye tracking function when the eye tracking function is recommended for a first time, the terminal device may recommend the eye tracking function again by using a gentle notification of the notification bar (refer to the embodiment corresponding to FIG. 4A, FIG. 4B, and FIG. 4C) after a preset time period (for example, 7 days or 14 days) starting from the first time of recommendation.

The "first time" herein may indicate that a banner notification is received for a first time in the following cases: 1. The user buys a new mobile phone, and the new mobile phone includes the eye tracking function corresponding to the method described in this embodiment of this application. 2. The user upgrades a software system of an old mobile phone, and an upgraded system version includes the eye tracking function corresponding to the method described in this embodiment of this application.

For example, FIG. 3A, FIG. 3B, FIG. 3C, and FIG. 3D are a schematic diagram of an interface of recommending an eye tracking function according to an embodiment of this application.

A terminal device may display an interface shown in FIG. 3A, when the terminal device receives a banner notification for a first time, detects that the eye tracking function is not enabled, and determines that the banner notification supports expansion (as shown in FIG. 1C). Alternatively, a terminal device may display an interface shown in FIG. 3B, when the terminal device receives a banner notification for a first time, detects that the eye tracking function is not enabled, and determines that the banner notification does not support expansion.

For the interface shown in FIG. 3A, the interface may include a banner notification 301 and a prompt capsule 302. The banner notification 301 includes a control used to expand the banner notification. The prompt capsule 302 includes a control 303 used to enable the eye tracking function. The prompt capsule 302 is used to prompt the user to gaze to expand the banner notification. The prompt capsule 302 may be displayed as Gaze to expand the notification. The control 303 may be displayed as Tap-to-open.

For the interface shown in FIG. 3B, the interface may include a banner notification 304 and a prompt capsule 305. The banner notification 304 does not include a control used to expand the banner notification. The prompt capsule 305 includes a control 306 used to enable the eye tracking function. The prompt capsule 305 is used to prompt the user to gaze at the banner notification to open an application interface corresponding to the banner notification. The prompt capsule 305 may be displayed as Gaze at the notification to open. The control 306 may be displayed as Tap-to-open.

With reference to the interface shown in FIG. 3A and the interface shown in FIG. 3B, it may be understood that different content may be displayed in the prompt capsule based on whether the banner notification supports expansion. For example, when the banner notification 301 supports expansion, the prompt capsule 302 may prompt the user that the notification can be expanded through gaze; or when the banner notification 304 does not support expansion, the prompt capsule 305 may prompt the user that an application corresponding to the banner notification can be opened through gaze.

Further, the terminal device may display an interface shown in FIG. 3C, when the terminal device receives a trigger operation performed by the user on the control 303 shown in FIG. 3A or receives a trigger operation performed by the user on the control 306 on the interface shown in FIG. 3B. For the interface shown in FIG. 3C, the interface may be a setting interface corresponding to a smart sensing function in system settings of the terminal device. The interface may include a control 307 (or referred to as an eye tracking control 307) used to enable and calibrate the eye tracking function. A word "Uncalibrated" may be displayed around the control 307. The word "Uncalibrated" may be used to indicate that the user does not enable the eye tracking function.

When the terminal device receives a trigger operation performed by the user on the control 307 and completes calibration for eye tracking on the interface shown in FIG. 3C, the terminal device may display an interface shown in FIG. 3D. For the interface shown in FIG. 3D, the interface may include a first switch 308, a second switch 309, a switch description, and a third switch 310. The first switch 308, the second switch 309, and the third switch 310 may be all in an on state by default after calibration is completed.

It may be understood that when the terminal device completes calibration for eye tracking, the terminal device may subsequently set on/off statuses of the first switch 308, the second switch 309, and the third switch 310 without further calibration. In addition, when the terminal device completes calibration for eye tracking and the terminal device opens the interface shown in FIG. 3C again, a word "Calibrated" may be displayed around the control 307 on the interface. The word "Calibrated" is used to indicate that the user has calibrated the eye tracking function. The on/off statuses of the three switches on the interface shown in FIG. 3D indicate whether the eye tracking function is enabled (a specific case is described below).

The switch description is used to indicate that the terminal device may dynamically track an auxiliary screen operation based on a human eye, and perform content indicated by the first switch or the second switch when a focus on the banner notification is recognized.

When the first switch 308 is in the on state, for the banner notification that supports expansion, the terminal device expands content of the banner notification when detecting that the user gazes at the banner notification. When the first switch 308 is in the off state, for the banner notification that supports expansion, the terminal device cannot expand the content of the banner notification even if detecting that the user gazes at the banner notification.

It may be understood that the first switch 308 is applicable to the banner notification that supports expansion, and the first switch 308 is not applicable to the banner notification that does not support expansion. Even if the first switch 308 is in the on state, for the banner notification that does not support expansion, the content of the banner notification cannot be expanded through gaze of the user.

When the second switch 309 is in the on state, for the banner notification that supports expansion and the banner notification that does not support expansion, the terminal device can open the application corresponding to the banner notification when detecting that the user gazes at the banner notification. When the second switch 309 is in the off state, for the banner notification that supports expansion and the banner notification that does not support expansion, the terminal device cannot open the application corresponding to the banner notification even if detecting that the user gazes at the banner notification.

It may be understood that the second switch 309 is applicable to the banner notification that supports expansion and the banner notification that does not support expansion. When the second switch 309 is in the on state, for both the banner notification that supports expansion and the banner notification that does not support expansion, the application corresponding to the banner notification can be opened through gaze of the user. Alternatively, when the second switch 309 is in the off state, for both the banner notification that supports expansion and the banner notification that does not support expansion, the application corresponding to the banner notification cannot be opened through gaze of the user.

It is assumed that the first switch 308 or the second switch 309 is in the on state. When the third switch 310 is in the on state and the terminal device receives the banner notification, the terminal device enables the eye tracking function described in this embodiment of this application. The terminal device may display a gaze cursor when the terminal device detects eye movement data and a gaze point indicated in the eye movement data is in a preset region of a display.

When the third switch 310 is in the off state, the gaze cursor is not displayed even if the terminal device detects the eye movement data and the gaze point indicated in the eye movement data is in the preset region on the display.

Alternatively, when both the first switch 308 and the second switch 309 are in the off state, the terminal device cannot enable the eye tracking function even if the third switch 310 is in the on state.

The eye movement data may be understood as a position of a human face, a position of the human eye, and/or the like. The eye movement data is not biological data that indicates the user. An area of the preset region occupies 1/3 of a total area of the display. The preset region is an upper region of the display.

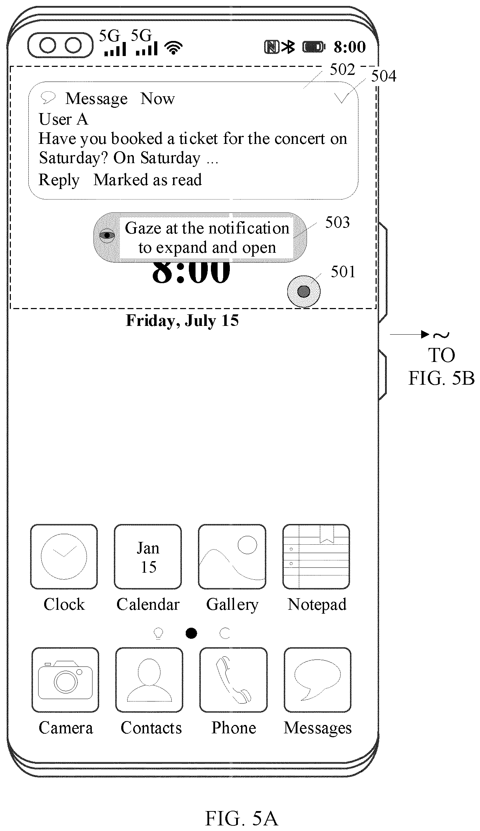

It may be understood that any interface described in the following embodiments corresponding to FIG. 5A to FIG. 9E may be an interface displayed when the third switch 310 is on. In a possible implementation, when the third switch 310 is in the off state, although the terminal device cannot display the gaze cursor based on a gaze status of the user and cannot display progress motion effect on an outermost side of the gaze cursor based on the gaze status of the user, content indicated by the first switch and/or the second switch may be still executed based on the gaze status of the user for the banner notification.

On the interface shown in FIG. 3D, subsequently, the terminal device may set, according to a user requirement, the first switch 308, the second switch 309, and the third switch 310 that are on by default.

According to the foregoing embodiment of this application, when receiving the banner notification for the first time and detecting that the eye tracking function is not enabled, the terminal device may prompt the user to enable the eye tracking function to improve experience of using the eye tracking function by the user.

For example, FIG. 4A, FIG. 4B, and FIG. 4C are a schematic diagram of another interface of recommending an eye tracking function according to an embodiment of this application.

A terminal device receives a banner notification for a first time and detects that an eye tracking function is not enabled. The terminal device may display the interface shown in FIG. 3A or FIG. 3B, and may also display a notification of the Tips application in a notification center. For example, when the terminal device receives an operation that a user slides down from the top of a display, the terminal device displays an interface shown in FIG. 4A. The interface may include a notification of the Tips application. Content of the notification includes information that indicates the eye tracking function.

For the interface shown in FIG. 4A, the interface may include a notification 401 initiated by the Tips application. The notification 401 is used to recommend the user to use the eye tracking function. The notification 401 may include text information 402 used to recommend use of the eye tracking function and a control 403 used to enable the eye tracking function. The text information 402 may be displayed as "Gaze at the screen, expand the banner notification, and open the application. Learn More". The control 403 may be displayed as Enable.

On the interface shown in FIG. 4A, when the terminal device receives a trigger operation performed by the user on the control 403, the terminal device may display an interface shown in FIG. 4B. The interface shown in FIG. 4B may include a control 404. A word "Uncalibrated" may be displayed around the control 404. The word "Uncalibrated" may be used to indicate that the user does not enable the eye tracking function.

When the terminal device receives a trigger operation performed by the user on the control 404 and completes calibration for eye tracking on the interface shown in FIG. 4B, the terminal device may display an interface shown in FIG. 4C. The interface shown in FIG. 4C is the same as the interface shown in FIG. 3D. Details are not described herein again.

In a possible implementation, when the user does not enable the eye tracking function when the eye tracking function is recommended for a first time, the terminal device may recommend the eye tracking function again to the user by using a gentle notification of a notification bar. For example, the terminal device may display the notification of the Tips application again in a notification center after a preset time period (for example, 7 days or 14 days) starting from the first time of recommending the eye tracking function. When the user pulls down from the top of the terminal device to display the notification center, the terminal device displays the interface shown in FIG. 4A. The interface shown in FIG. 4A includes the notification of the Tips application. The content of the notification includes information that indicates the eye tracking function.

It may be understood that if the user has enabled the eye tracking function during the first time of recommending the eye tracking function, the terminal device does not need to display the notification of the Tips application again in the notification center.

On this basis, the terminal device may implement a plurality of recommendations for the eye tracking function, to improve frequency of using the eye tracking function by the user and experience of using the eye tracking function by the user.

When the eye tracking function is enabled on the terminal device based on the embodiment corresponding to FIG. 3A, FIG. 3B, FIG. 3C, and FIG. 3D, or FIG. 4A, FIG. 4B, and FIG. 4C, the terminal device may determine, based on setting statuses of the user for the first switch and the second switch and whether the banner notification supports expansion, how to implement display when a gaze point is on the banner notification.

Any interface described in the following embodiments corresponding to FIG. 5A to FIG. 8E may be an interface displayed when the third switch 310 is on.

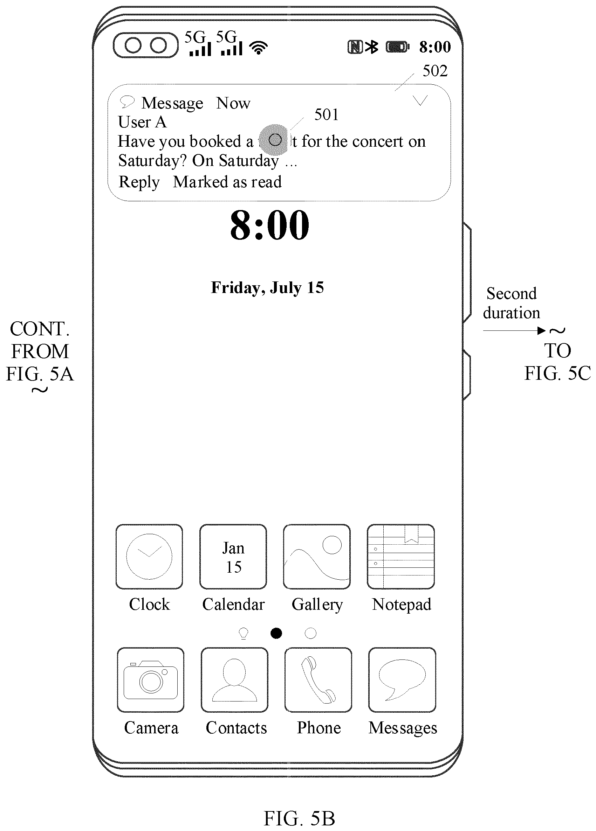

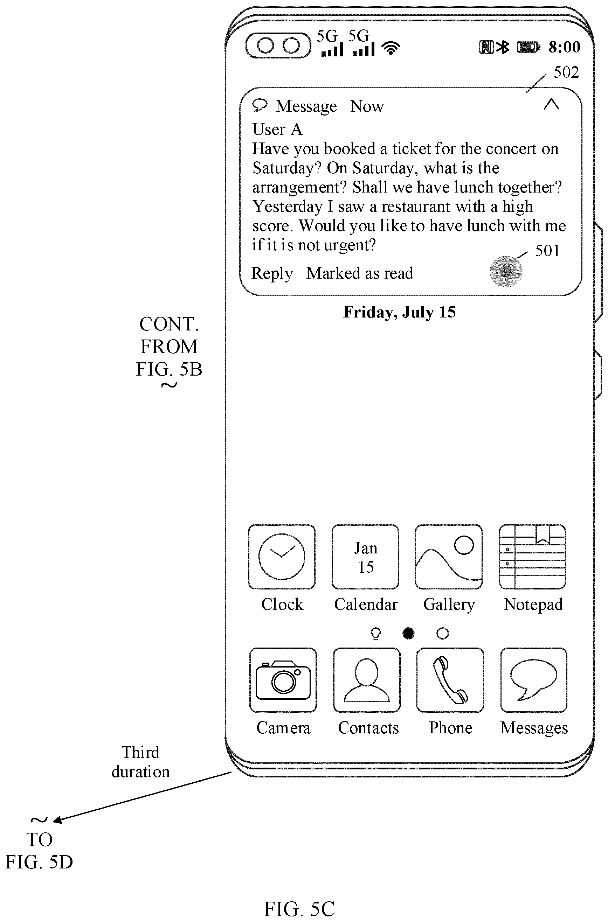

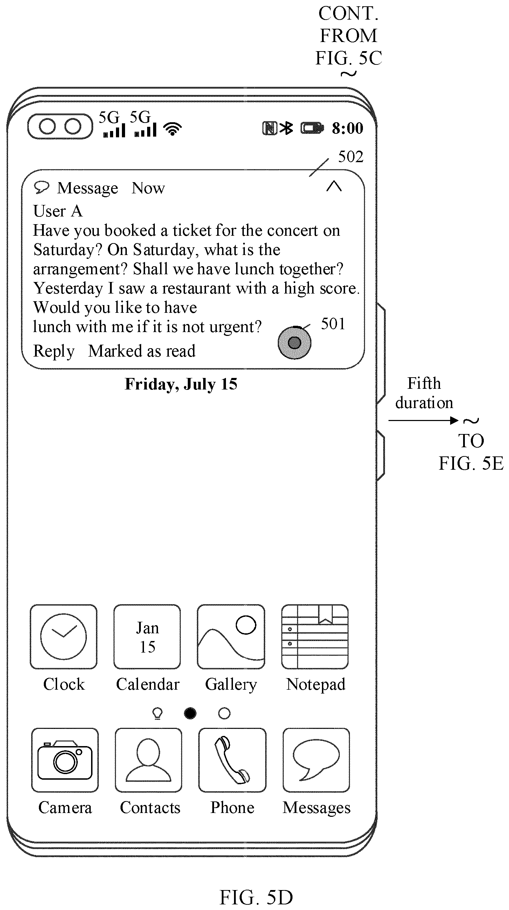

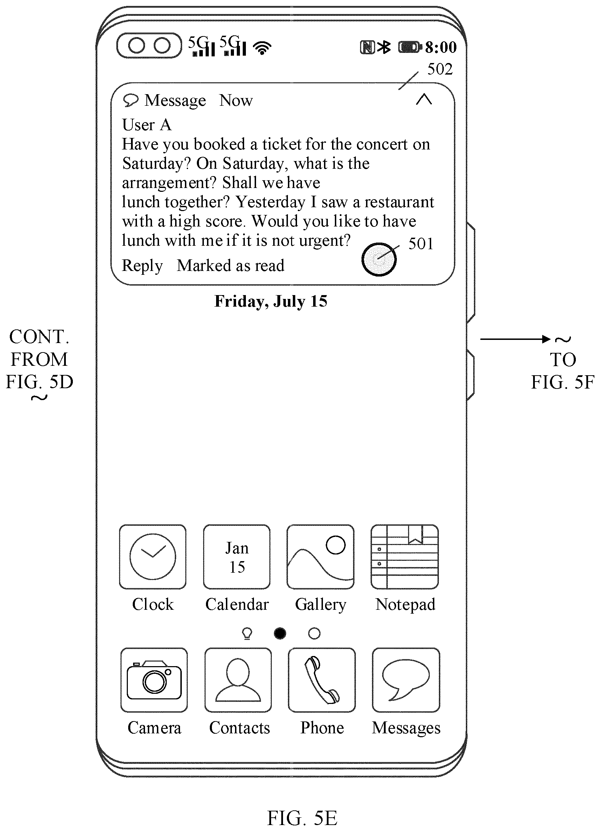

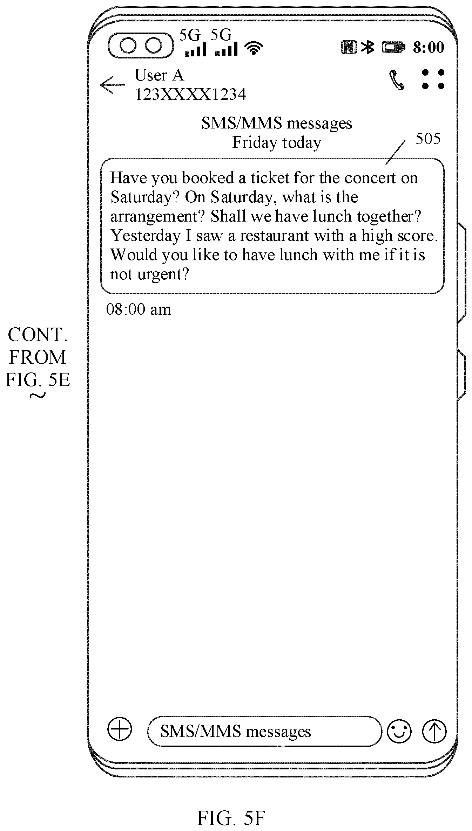

For a banner notification that supports expansion:
When the first switch and the second switch are both on and the terminal device detects the banner notification and determines that the banner notification supports expansion, the terminal device may enable the eye tracking function. For example, when detecting that the gaze point is in a region in which the banner notification is located, the terminal device expands the banner notification and opens an application corresponding to the banner notification (refer to the embodiment corresponding to FIG. 5A, FIG. 5B, FIG. 5C, FIG. 5D, FIG. 5E, and FIG. 5F).

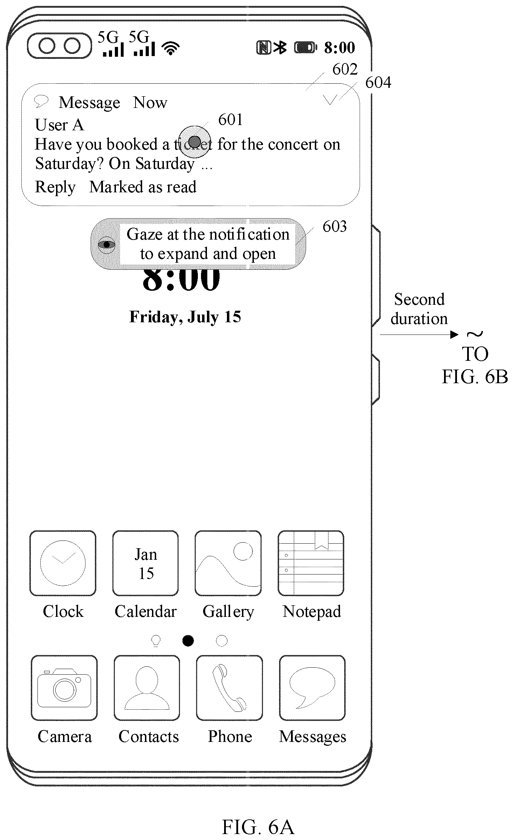

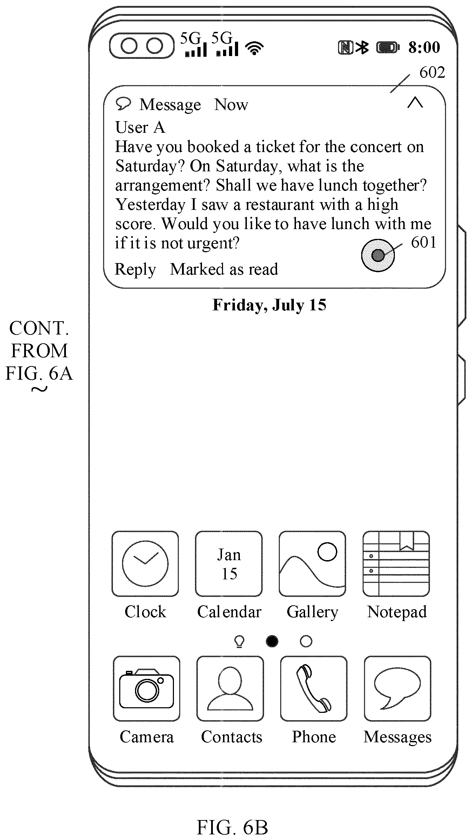

When the first switch is on, the second switch is off, and the terminal device detects the banner notification and determines that the banner notification supports expansion, the terminal device may enable the eye tracking function. For example, when detecting that the gaze point is in a region in which the banner notification is located, the terminal device expands the banner notification (refer to the embodiment corresponding to FIG. 6A and FIG. 6B).

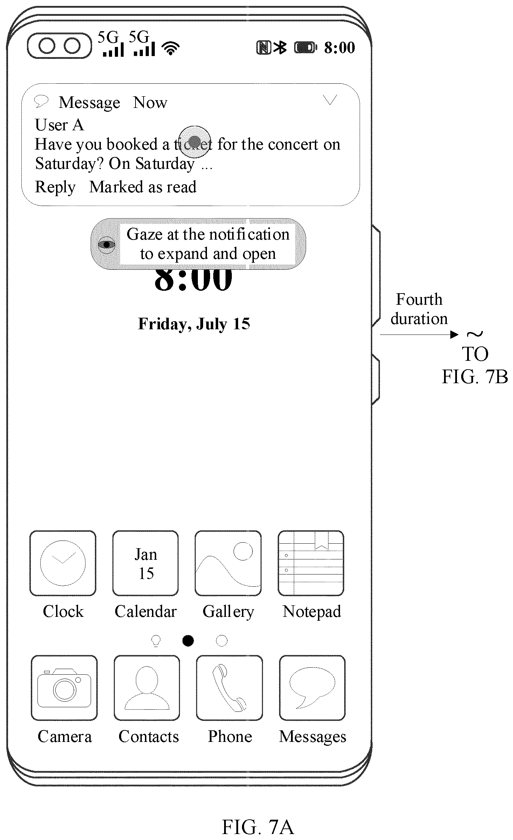

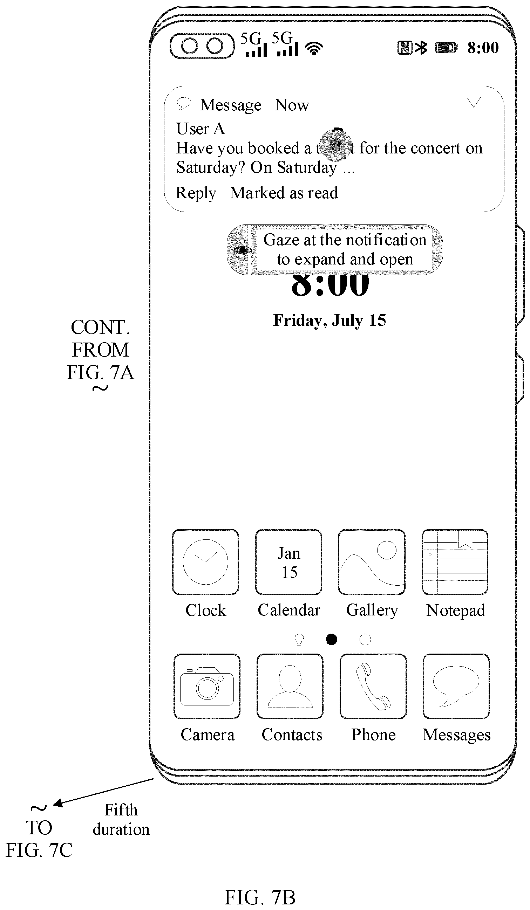

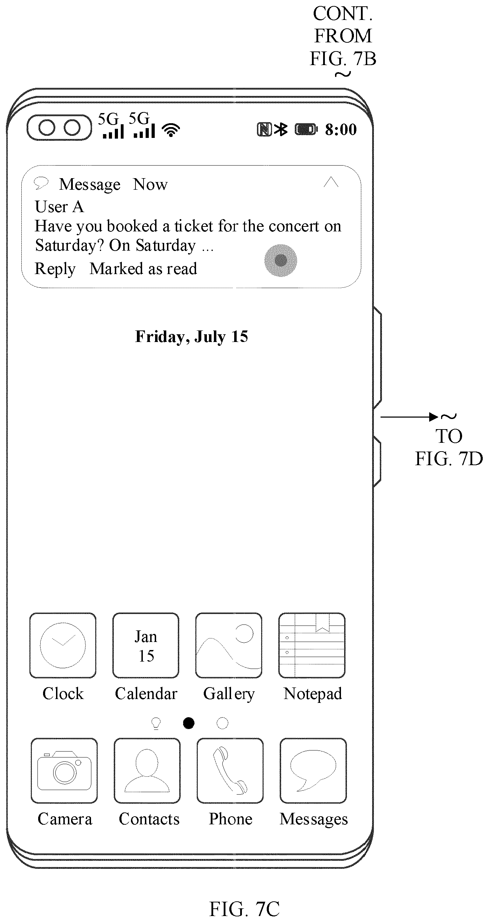

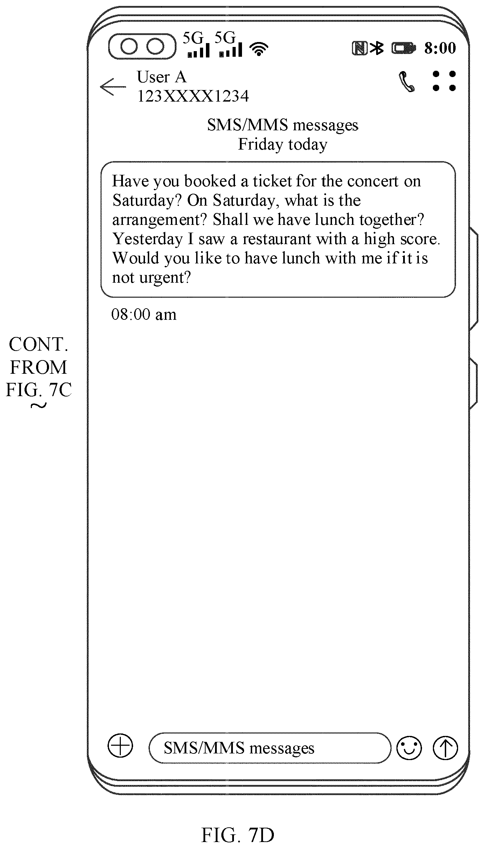

When the first switch is off, the second switch is on, and the terminal device detects the banner notification and determines that the banner notification supports expansion, the terminal device may enable the eye tracking function. For example, when detecting that the gaze point is in a region in which the banner notification is located, the terminal device opens an application corresponding to the banner notification (refer to the embodiment corresponding to FIG. 7A, FIG. 7B, FIG. 7C, and FIG. 7D).

When the first switch and the second switch are both off, the terminal device may not monitor the banner notification, and therefore cannot enable the eye tracking function.

It may be understood that when the terminal device completes calibration of the eye tracking function, the first switch and the second switch are in an on state by default. Therefore, that the first switch is off and/or the second switch is off described in this embodiment of this application may be understood as that the user turns off the first switch and/or the second switch after the first switch and the second switch are in the on state by default.

That the first switch and the second switch are both off may be understood as a case in which calibration is completed for the eye tracking function, but the eye tracking function is disabled, and therefore, the terminal device does not need to monitor the banner notification. When the first switch or the second switch is in the on state, the terminal device may monitor the banner notification; and when detecting the banner notification, determine, based on whether the banner notification supports expansion, whether to enable the eye tracking function.

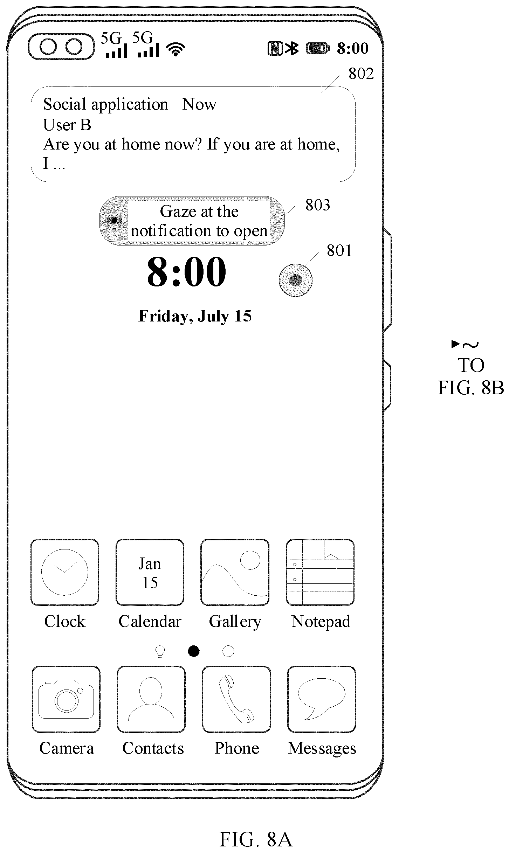

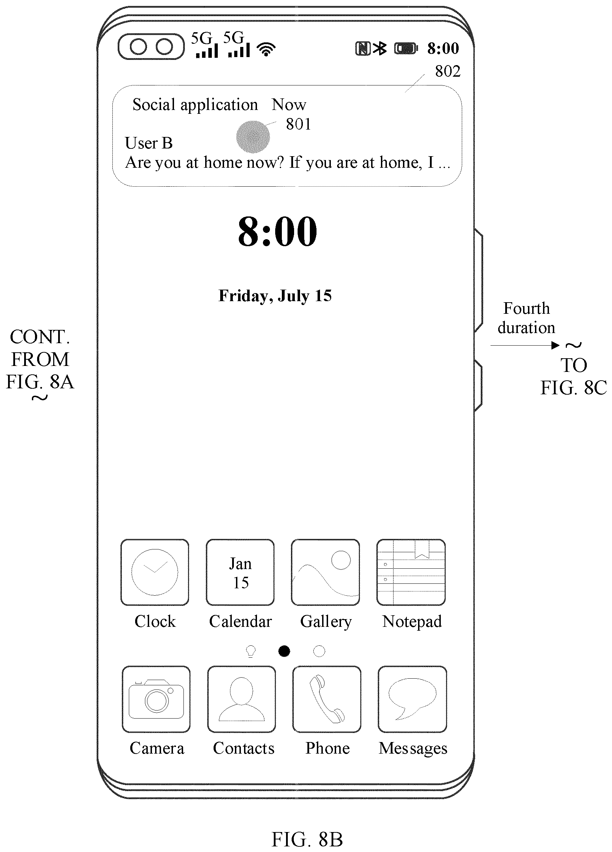

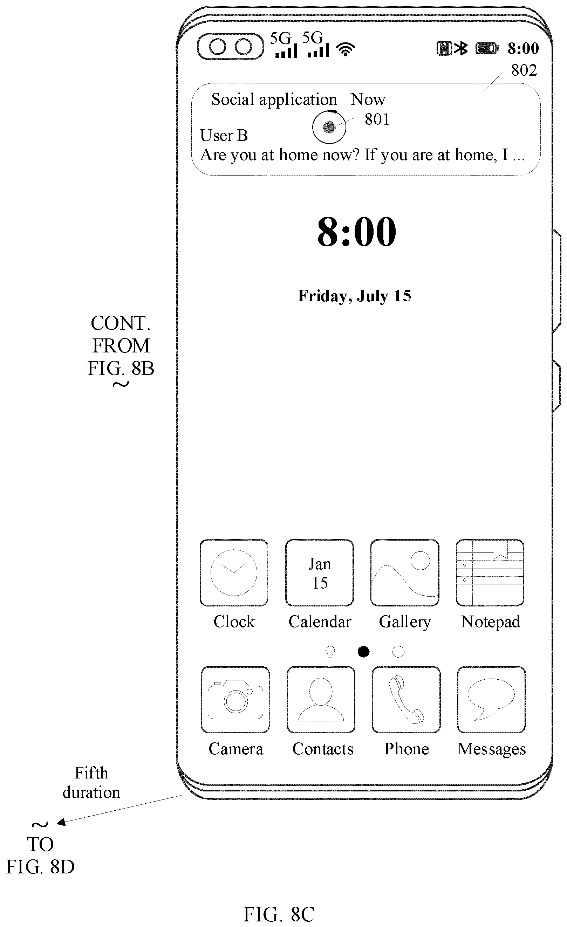

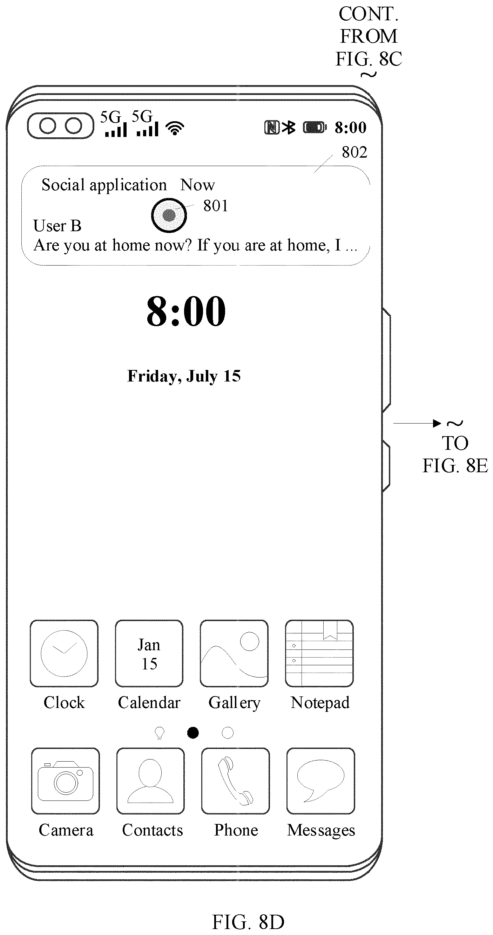

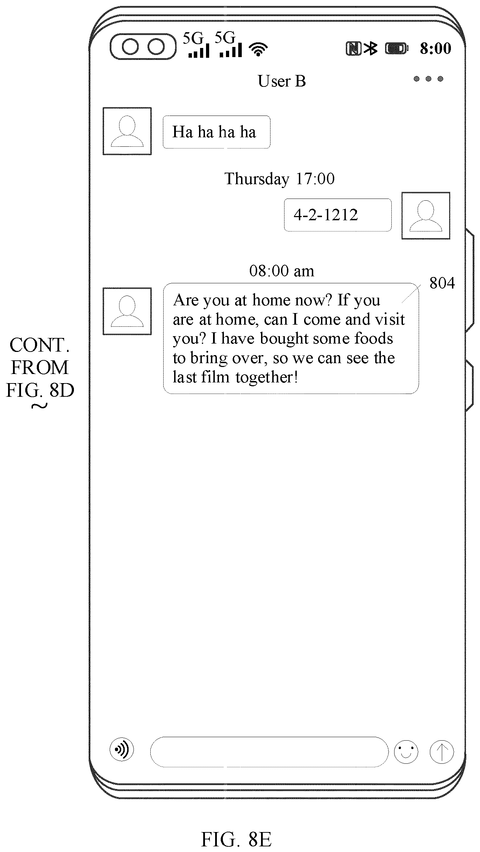

For a banner notification that does not support expansion:
When the first switch and the second switch are both on and the terminal device detects the banner notification and determines that the banner notification does not support expansion, the terminal device may enable the eye tracking function. For example, when detecting that the gaze point is in a region in which the banner notification is located, the terminal device opens an application corresponding to the banner notification (refer to the embodiment corresponding to FIG. 8A, FIG. 8B, FIG. 8C, FIG. 8D, and FIG. 8E).

When the first switch is on, the second switch is off, and the terminal device detects the banner notification and determines that the banner notification does not support expansion, the terminal device may not enable the eye tracking function.

When the first switch is off, the second switch is on, and the terminal device detects the banner notification and determines that the banner notification does not support expansion, the terminal device may enable eye tracking. For example, when detecting that the gaze point is in a region in which the banner notification is located, the terminal device opens an application corresponding to the banner notification (refer to the embodiment corresponding to FIG. 8A, FIG. 8B, FIG. 8C, FIG. 8D, and FIG. 8E).

When the first switch and the second switch are both off, the terminal device may not monitor the banner notification, and therefore cannot enable the eye tracking function.

In an implementation, when the first switch and the second switch are both on and the terminal device detects the banner notification and determines that the banner notification supports expansion, the terminal device may enable the eye tracking function. For example, when detecting that the gaze point is in a region in which the banner notification is located, the terminal device expands the banner notification and opens an application corresponding to the banner notification.

For example, FIG. 5A, FIG. 5B, FIG. 5C, FIG. 5D, FIG. 5E, and FIG. 5F are a schematic diagram of a banner notification opening interface according to an embodiment of this application.

When the first switch and the second switch are both on, the terminal device may monitor a banner notification. For example, when the terminal device detects the banner notification and determines that the banner notification supports expansion, the terminal device enables the eye tracking function. When the user gazes at a preset region, the terminal device displays an interface shown in FIG. 5A. The interface may include a gaze cursor 501, a banner notification 502, and a prompt capsule 503. The banner notification 502 may include a control 504 used to expand the banner notification.

The gaze cursor 501 is used to indicate a gaze point of the user. The gaze cursor 501 is not in a region in which the banner notification 502 is located. However, the gaze cursor 501 is in a preset region of a display. The gaze cursor 501 may be a translucent icon that includes two concentric circles. The two circles have different depth. A color of an inner circle is darker than a color of an outer circle. In addition, the gaze cursor 501 presents same display effect in different display modes of the terminal device. The different display modes may include a dark-color mode, a light-color mode, and the like.

It may be understood that, after the eye tracking function is enabled, when the gaze point of the user is not in the preset region, the terminal device may not display the gaze cursor 501. When it is detected that the gaze point of the user moves from a region other than the preset region of the display to the preset region, the terminal device may display a solid dot in a position of the gaze point, expand the dot within duration such as 200 ms, and transparently display the dot until the gaze cursor 501 is displayed.

An area of the preset region occupies 1/3 of a total area of the display. The preset region is an upper region of the display. For example, the preset region may be a region in a dashed-line box in FIG. 5A. The preset region includes the banner notification 502.

The prompt capsule 503 is used to prompt the user that content of the banner notification can be expanded and an interface corresponding to the banner notification can be opened through gazing at the banner notification. The prompt capsule 503 can be displayed when the eye tracking function is enabled and a banner notification appears in first two times (or first three times) or the like, to indicate the user to gaze at the banner notification. Then, the prompt capsule 503 may no longer be displayed.

On the interface shown in FIG. 5A, when the terminal device detects that the gaze point moves to the region in which the banner notification 502 is located, the terminal device may display an interface shown in FIG. 5B. On the interface shown in FIG. 5B, the gaze cursor 501 is in the region in which the banner notification 502 is located. Compared with the banner notification 502 on the interface shown in FIG. 5A, the banner notification 502 on the interface shown in FIG. 5B may be scaled up based on a scale-up ratio. The scale-up ratio may be a value such as 102%. It may be understood that duration from display to disappearance of the banner notification may be first duration. In other words, the banner notification may disappear when display duration reaches the first duration. The first duration may be 5 seconds, or an allowed value range of the first duration may be 5 seconds to 10 seconds.

For a process of expanding the banner notification 502, when the terminal device detects that duration in which the gaze point is continuously on the banner notification 502 reaches second duration, the terminal device expands the banner notification 502, and an interface displayed by the terminal device is switched from FIG. 5B to FIG. 5C. For example, on the interface shown in FIG. 5B, when the terminal device detects that the gaze point is continuously in the region for the second duration in which the banner notification 502 is located, the terminal device may display an interface shown in FIG. 5C. The second duration may be duration of expanding the banner notification. The second duration may be 500 milliseconds. An allowed value range of the second duration may be 400 milliseconds to 1 second.

For the interface shown in FIG. 5C, the interface may include the expanded banner notification 502. Complete information content may be displayed in the expanded banner notification 502. The gaze cursor 501 is in a region in which the expanded banner notification 502 is located. An area occupied by the expanded banner notification 502 shown in FIG. 5C may be greater than the area occupied by the banner notification 502 shown in FIG. 5B.

In a process of starting a progress bar of the gaze cursor 501, when the terminal device detects that duration in which the gaze point is continuously on the expanded banner notification 502 reaches third duration, the terminal device starts the progress bar on an outermost side of the gaze cursor 501, and an interface displayed by the terminal device is switched from the interface shown in FIG. 5C to an interface shown in FIG. 5D. On the interface shown in FIG. 5C, when the terminal device detects that the duration in which the gaze point is in the region in which the expanded banner notification 502 is located reaches third duration, and determines that the second switch is turned on, the terminal device may start the circular progress bar on the outer side of the gaze cursor 501, so that the progress bar is in a start position. The interface shown in FIG. 5C is switched to the interface shown in FIG. 5D. The third duration may be duration from expansion of the banner notification to start of the progress bar on the outer side of the gaze cursor, for example, duration in which the interface shown in FIG. 5C is switched to the interface shown in FIG. 5D. The third duration may be 2 seconds. An allowed value range of the third duration may be 1.5 seconds to 4 seconds.

In a process of completing a progress of the gaze cursor 501, when the terminal device detects that duration in which the gaze point is continuously on the expanded banner notification 502 reaches fifth duration, the terminal device completes rotation of the gaze cursor 501. An interface displayed by the terminal device is switched from the interface shown in FIG. 5D to an interface shown in FIG. 5E. On the interface shown in FIG. 5D, when it is determined that duration from start of the progress bar on the outermost side of the gaze cursor to completion of the progress reaches the fifth duration, the progress bar is in an end position. The terminal device displays the interface shown in FIG. 5E. Further, the terminal device may display an interface shown in FIG. 5F, when the progress of the cursor is completed. The fifth duration may be duration from start of the gaze cursor to completion of the gaze cursor, for example, duration in which the interface shown in FIG. 5C is switched to the interface shown in FIG. 5F. The fifth duration may be 800 milliseconds. An allowed range of the fifth duration may be 500 milliseconds to 2 seconds.

For the interface shown in FIG. 5D, the terminal device starts the circular progress bar on the outer side of the gaze cursor 501. The outermost progress bar of the gaze cursor 501 starts to rotate clockwise from a due north direction, and presents a dark color at a rotation position. With rotation of the progress bar, a length in the dark color gradually increases until the outermost progress bar of the gaze cursor 501 presents the dark color. As displayed on the interface shown in FIG. 5E, the progress of the gaze cursor 501 is completed.

It may be understood that, on the interface shown in FIG. 5C, when the terminal device detects that the duration in which the gaze point is continuously on the expanded banner notification 502 reaches seventh duration, the terminal device may start the progress bar of the gaze cursor 501, complete the progress bar of the gaze cursor 501, and further open the application corresponding to the banner notification. The seventh duration may be a sum of the third duration and the fifth duration.

In a possible implementation, in different display modes of the terminal device, displayed brightness of the progress bar on the outer side of the gaze cursor 501 may be different.

For the interface shown in FIG. 5F, the interface may be the interface corresponding to the expanded banner notification 502. Display of the banner notification and the gaze cursor may be canceled on the interface. Information 505 may be displayed on the interface. Information content in the information 505 may be consistent with the information content in the expanded banner notification 502. Details are not described herein.

In a possible implementation, on any interface shown in FIG. 5B to FIG. 5E, when the terminal device detects a new banner notification, the terminal device may interrupt eye tracking of the banner notification in FIG. 5B to FIG. 5E, and enable eye tracking of the new banner notification based on a status in which the new banner notification is expanded. A process of performing eye tracking on the new banner notification may be the same as the method for starting eye tracking in the embodiment corresponding to FIG. 5A, FIG. 5B, FIG. 5C, FIG. 5D, FIG. 5E, and FIG. 5F. Details are not described herein again.

It may be understood that, on any interface shown in FIG. 5B to FIG. 5D, display of the banner notification may be canceled when display duration reaches duration after which the banner notification disappears, and display of the gaze cursor may be canceled when duration in which the gaze point of the user leaves the banner notification reaches sixth duration or the gaze point leaves the preset region. For example, when the duration in which the gaze point of the user leaves the banner notification reaches the sixth duration, the eye tracking function is disabled, and the gaze cursor disappears. The sixth duration may be duration in which the eye tracking function exits. An allowed value range of the sixth duration may be 500 milliseconds to 2 seconds. For example, the sixth duration may be 1 second.

In another implementation, when the first switch is on, the second switch is off, and the terminal device detects the banner notification and determines that the banner notification supports expansion, the terminal device may enable the eye tracking function. For example, when detecting that the gaze point is in the region in which the banner notification is located, the terminal device expands the banner notification.

For example, FIG. 6A and FIG. 6B are a schematic diagram of another banner notification opening interface according to an embodiment of this application.

When the first switch is on and second switch is off, the terminal device may monitor a banner notification. For example, when the terminal device receives the banner notification and determines that the banner notification supports expansion, the terminal device may enable an eye tracking function. When detecting that a gaze point is in a region in which the banner notification is located, the terminal device may display an interface shown in FIG. 6A. The interface may include a gaze cursor 601, a banner notification 602, and a prompt capsule 603. The banner notification 602 may include a control 604 used to expand the banner notification. The gaze cursor 601 is in a region in which the banner notification 602 is located. For functions and display content of the prompt capsule 603, refer to the description of the prompt capsule 503 shown in FIG. 5A. Details are not described herein again.

For a process of expanding the banner notification 602, when the terminal device detects that duration in which the gaze point is continuously on the banner notification 602 reaches second duration, the terminal device expands the banner notification 602, and an interface displayed by the terminal device is switched from FIG. 6A to FIG. 6B. On the interface shown in FIG. 6A, when the terminal device detects that duration in which the gaze point is continuously in a region in which the banner notification 602 is located reaches the second duration, the terminal device may display an interface shown in FIG. 6B. On the interface shown in FIG. 6B, the gaze cursor 601 is in the region in which the expanded banner notification 602 is located, and content displayed on the interface shown in FIG. 6B may be similar to the interface shown in FIG. 5C. Details are not described herein again.

It may be understood that because the second switch is in an off state, when the banner notification is in an expanded state, even if the gaze point is continuously on the expanded banner notification, the terminal device does not open an application interface corresponding to the banner notification.

It may be understood that, on any interface shown in FIG. 6A or FIG. 6B, display of the banner notification may be canceled when display duration reaches duration after which the banner notification disappears, and display of the gaze cursor may be canceled when duration in which the gaze point of the user leaves the banner notification reaches sixth duration or the gaze point leaves a preset region.

In still another implementation, when the first switch is off, the second switch is on, and the terminal device detects the banner notification and determines that the banner notification supports expansion, the terminal device may enable the eye tracking function. For example, when detecting that the gaze point is in the region in which the banner notification is located, the terminal device opens an application corresponding to the banner notification.

For example, FIG. 7A, FIG. 7B, FIG. 7C, and FIG. 7D are a schematic diagram of still another banner notification opening interface according to an embodiment of this application.

When the first switch is off and the second switch is on, the terminal device may monitor a banner notification. For example, when the terminal device receives the banner notification and determines that the banner notification supports expansion, the terminal device may enable an eye tracking function. When detecting that a gaze point is in a region in which the banner notification is located, the terminal device may display an interface shown in FIG. 7A. Content displayed on the interface may be similar to the interface shown in FIG. 5B. Details are not described herein again.

In a process of starting a gaze cursor, when the terminal device detects that duration in which the gaze point is continuously on the banner notification reaches fourth duration, the terminal device starts a progress bar on the outermost side of the gaze cursor, and an interface displayed by the terminal device is switched from the interface shown in FIG. 7A to an interface shown in FIG. 7B. On the interface shown in FIG. 7A, when the terminal device detects that duration in which the gaze point is continuously in the region in which the banner notification is located reaches the fourth duration, the terminal device may start rotation of the progress bar on the outermost side of the gaze cursor and display an interface shown in FIG. 7B. The fourth duration may be duration from moving the gaze cursor to the banner notification to starting rotation of the progress bar of the gaze cursor. The fourth duration may be 500 milliseconds. An allowed value range of the fourth duration may be 400 milliseconds to 2 seconds.

In a process of completing a progress of the gaze cursor 501, when detecting that duration in which the gaze point is continuously in the region in which the banner notification is located reaches fifth duration, the terminal device completes rotation of the progress bar. An interface displayed by the terminal device is switched from the interface shown in FIG. 7B to an interface shown in FIG. 7C. Further, after displaying the interface shown in FIG. 7C, the terminal device may open an application corresponding to the banner notification, and display an interface shown in FIG. 7D.

It may be understood that, when the terminal device detects that the duration in which the gaze point is continuously on the banner notification reaches eighth duration, the terminal device may start the progress bar of the gaze cursor, complete the progress bar of the gaze cursor, and further open the application corresponding to the banner notification. The eighth duration may be a sum of the fourth duration and the fifth duration.

In yet another implementation, when the first switch and the second switch are both on and the terminal device detects the banner notification and determines that the banner notification does not support expansion, the terminal device may enable the eye tracking function. For example, when detecting that the gaze point is in the region in which the banner notification is located, the terminal device opens the application corresponding to the banner notification. Alternatively, when the first switch is off, the second switch is on, and the terminal device detects the banner notification and determines that the banner notification does not support expansion, the terminal device may enable eye tracking. For example, when detecting that the gaze point is in the region in which the banner notification is located, the terminal device opens the application corresponding to the banner notification.

It may be understood that, because the banner notification does not support expansion, the terminal device cannot expand the banner notification regardless of whether the first switch is in an on state or the first switch is in an off state. On or off of the first switch does not affect a process of enabling the eye tracking function and opening the application corresponding to the banner notification when the terminal device receives the banner notification that does not support expansion. FIG. 8A, FIG. 8B, FIG. 8C, FIG. 8D, and FIG. 8E describe opening of the application corresponding to the banner notification by using an example in which the first switch is off, the second switch is on, and the banner notification does not support expansion. For example, FIG. 8A, FIG. 8B, FIG. 8C, FIG. 8D, and FIG. 8E are a schematic diagram of yet another banner notification opening interface according to an embodiment of this application. In the embodiment corresponding to FIG. 8A, FIG. 8B, FIG. 8C, FIG. 8D, and FIG. 8E, that the banner notification is a banner notification 802 sent by a social application is used as an example for description. The banner notification 802 does not support expansion.

When the first switch is off and the second switch is on, the terminal device may monitor a banner notification. For example, when the terminal device detects the banner notification and determines that the banner notification does not support expansion, the terminal device may enable an eye tracking function. When detecting that a gaze point is in a preset region, the terminal device displays an interface shown in FIG. 8A. The interface may include a gaze cursor 801, the banner notification 802, and a prompt capsule 803.

The prompt capsule 803 is used to prompt a user that an interface corresponding to the banner notification can be opened through gazing at the banner notification. The prompt capsule 803 can be displayed when the eye tracking function is enabled and the banner notification appears in first two times (or first three times) or the like, to indicate the user to gaze at the banner notification. The gaze cursor 801 is in the preset region. For description of the preset region, refer to the embodiment corresponding to FIG. 5A, FIG. 5B, FIG. 5C, FIG. 5D, FIG. 5E, and FIG. 5F.

On the interface shown in FIG. 8A, when the terminal device detects that the gaze point moves to a region in which the banner notification 802 is located, the terminal device may display an interface shown in FIG. 8B. On the interface shown in FIG. 8B, the gaze cursor 801 is in the region in which the banner notification 802 is located. The banner notification 802 on the interface shown in FIG. 8B may be scaled up based on a scale-up ratio. The scale-up ratio may be a value such as 102%.

In a process of starting the gaze cursor 801, when the terminal device detects that duration in which the gaze point is continuously on the banner notification 802 reaches fourth duration, the terminal device starts a progress bar on the outermost side of the gaze cursor 801, and an interface displayed by the terminal device is switched from the interface shown in FIG. 8B to an interface shown in FIG. 8C.

In a process of completing a progress of the gaze cursor 801, when detecting that duration in which the gaze point is continuously in the region in which the banner notification 802 is located reaches fifth duration, the terminal device completes rotation of the progress bar. An interface displayed by the terminal device is switched from the interface shown in FIG. 8C to an interface shown in FIG. 8D. Further, after displaying the interface shown in FIG. 8D, the terminal device may open an application corresponding to the banner notification 802, and display an interface shown in FIG. 8E.

On the interface shown in FIG. 8E, the interface may be an interface of the social application. The interface may include information 804. Information content in the banner notification 802 may be fully displayed in the information 804. Further, the user may view the complete content in the banner notification 802 or reply to a message on the interface shown in FIG. 8E. On any interface shown in FIG. 8B to FIG. 8D, display of the banner notification may be canceled when display duration reaches duration after which the banner notification disappears, and display of the gaze cursor may be canceled when duration in which the gaze point of the user leaves the banner notification reaches sixth duration or the gaze point leaves the preset region.

It may be understood that, when the terminal device detects that the duration in which the gaze point is continuously on the banner notification reaches eighth duration, the terminal device may start the progress bar of the gaze cursor, complete the progress bar of the gaze cursor, and further open the application corresponding to the banner notification. The eighth duration may be a sum of the fourth duration and the fifth duration.

Based on the embodiments corresponding to FIG. 5A to FIG. 8E, the terminal device may flexibly expand the banner notification and/or open the application interface corresponding to the banner notification, when detecting that the gaze point is in the region in which the banner notification is located and gaze duration meets a specific condition.

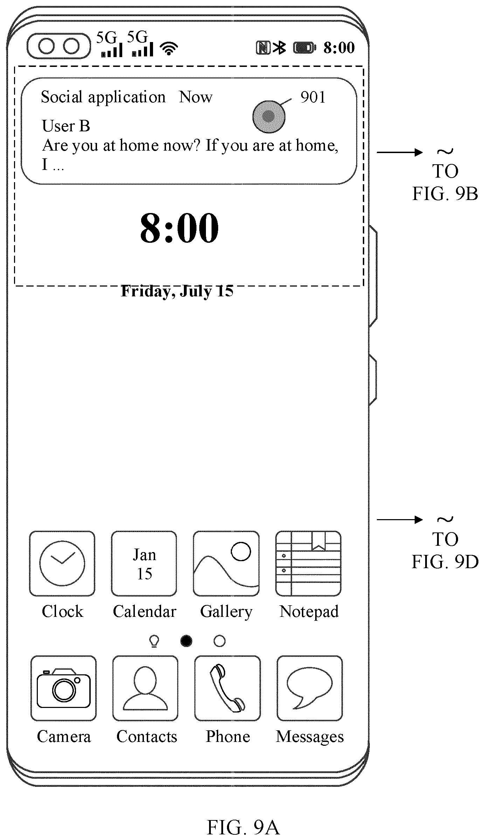

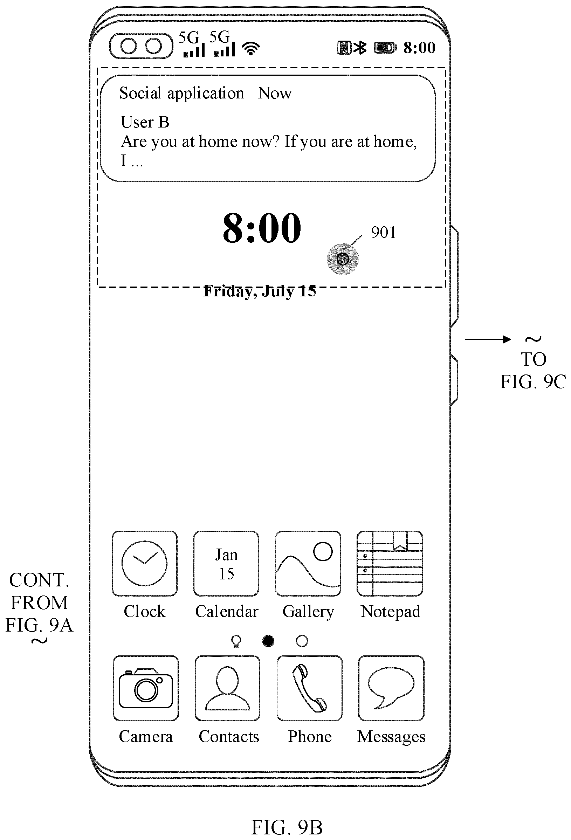

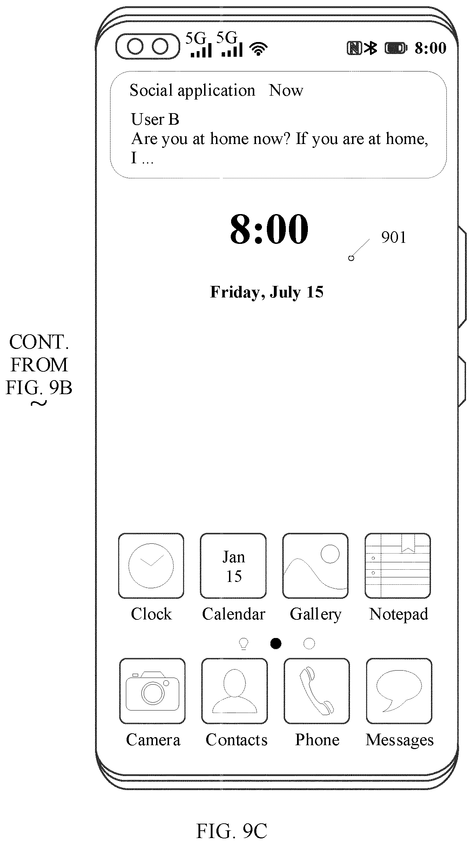

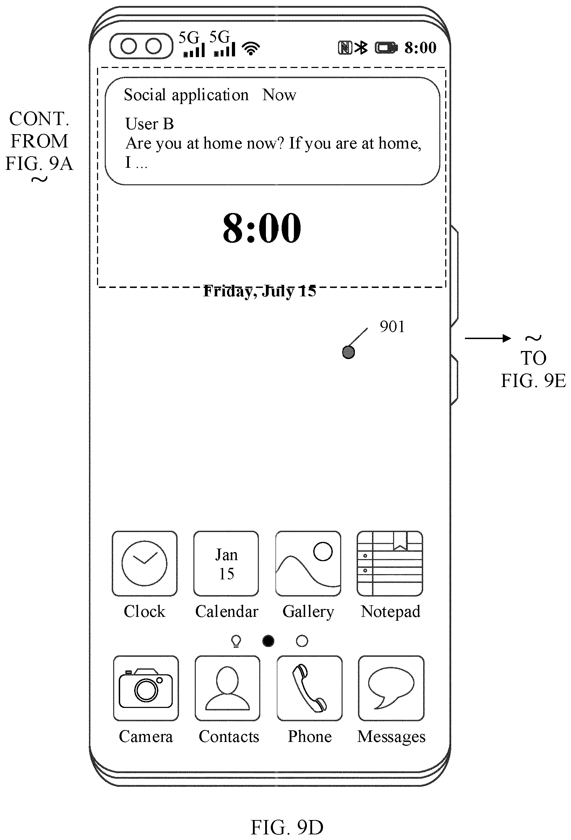

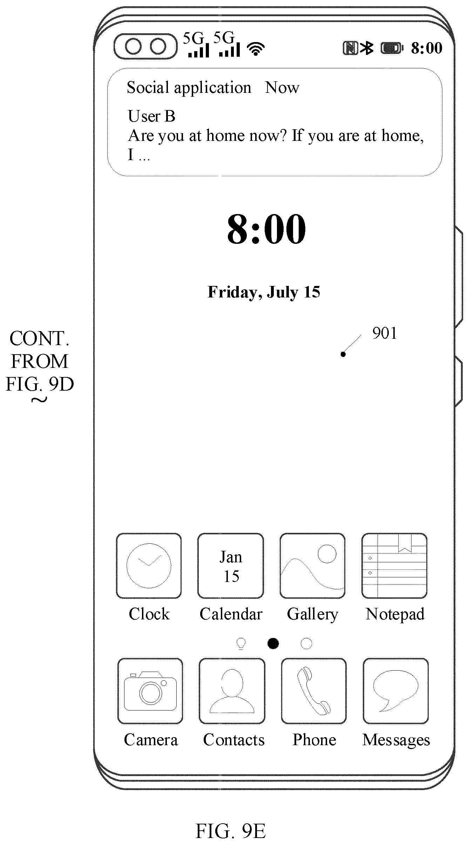

For example, FIG. 9A, FIG. 9B, FIG. 9C, FIG. 9D, and FIG. 9E are a schematic diagram of an interface on which a gaze cursor disappears according to an embodiment of this application.

In the embodiment corresponding to FIG. 9A, FIG. 9B, FIG. 9C, FIG. 9D, and FIG. 9E, display of a gaze cursor may be canceled when duration in which a gaze point of a user leaves a banner notification reaches sixth duration, or canceled when a gaze point leaves a preset region.

In an implementation, the terminal device displays an interface shown in FIG. 9A, and a gaze cursor 901 on the interface is in a region in which the banner notification is located. When the terminal device detects that the gaze point of the user leaves the banner notification, the gaze cursor 901 moves along with the gaze point of the user to a preset region on an interface shown in FIG. 9B (a dashed-line region on the interface shown in FIG. 9B). A display box of the banner notification is scaled down, and timing is started.

When the terminal device detects that the duration in which the gaze point of the user leaves the banner notification reaches sixth duration, the terminal device may end an eye tracking procedure, and further cancel display of the gaze cursor 901. In a process of canceling display of the gaze cursor 901, the terminal device may switch from the interface shown in FIG. 9B to an interface shown in FIG. 9C. The gaze cursor 901 gradually shrinks inward, and a color of the gaze cursor 901 gradually deepens.

On the interface shown in FIG. 9C, the gaze cursor 901 is displayed as a dot with the deepest color. Further, the gaze cursor 901 on the interface shown in FIG. 9C may disappear.

In another implementation, the terminal device displays the interface shown in FIG. 9A, and the gaze cursor 901 on the interface is in the region in which the banner notification is located. When the terminal device detects that the gaze point of the user leaves the preset region, the gaze cursor 901 moves along with the gaze point of the user to a lower side of the preset region on an interface shown in FIG. 9D, and display of the gaze cursor 901 is gradually canceled. In a process of canceling display of the gaze cursor 901, the terminal device may switch from the interface shown in FIG. 9D to an interface shown in FIG. 9E. The gaze cursor 901 gradually shrinks inward, and the color of the gaze cursor 901 gradually deepens.

On the interface shown in FIG. 9E, the gaze cursor 901 is displayed as a dot with the deepest color. Further, the gaze cursor 901 on the interface shown in FIG. 9E may disappear.

It may be understood that, in a process in which the gaze cursor 901 disappears in the embodiment corresponding to FIG. 9A, FIG. 9B, FIG. 9C, FIG. 9D, and FIG. 9E, display duration of the banner notification may not reach duration after which a banner disappears, and therefore, a position of the banner notification may not change.

In a possible implementation, on the interface shown in FIG. 9A, when the terminal device detects that the banner notification reaches the duration after which the banner notification disappears, the banner notification and the gaze cursor 901 both disappear.

For the interface shown in FIG. 9B or FIG. 9C, when the terminal device detects that the duration in which the gaze point leaves the banner notification does not reach sixth duration, and the terminal device detects that the gaze point returns to the banner notification, the terminal device may display the interface shown in FIG. 9A. For the interface shown in FIG. 9D or FIG. 9E, when the terminal device detects that the gaze point returns to the banner notification, the terminal device may display the interface shown in FIG. 9A.

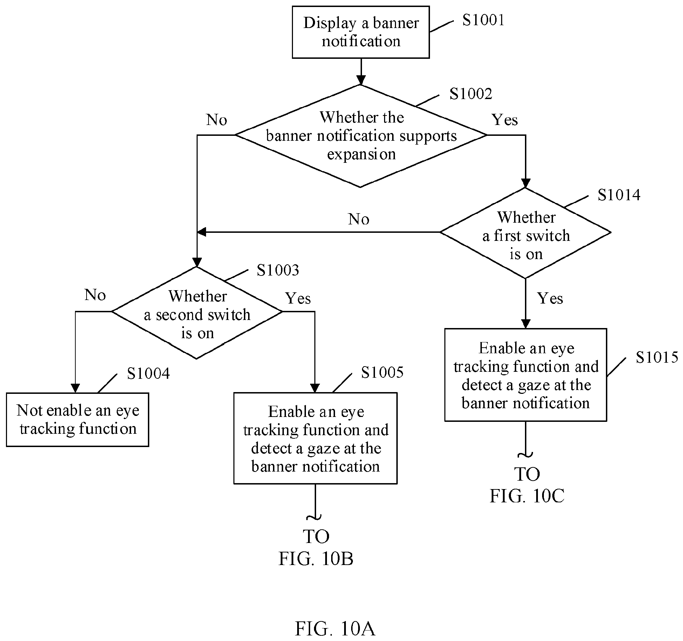

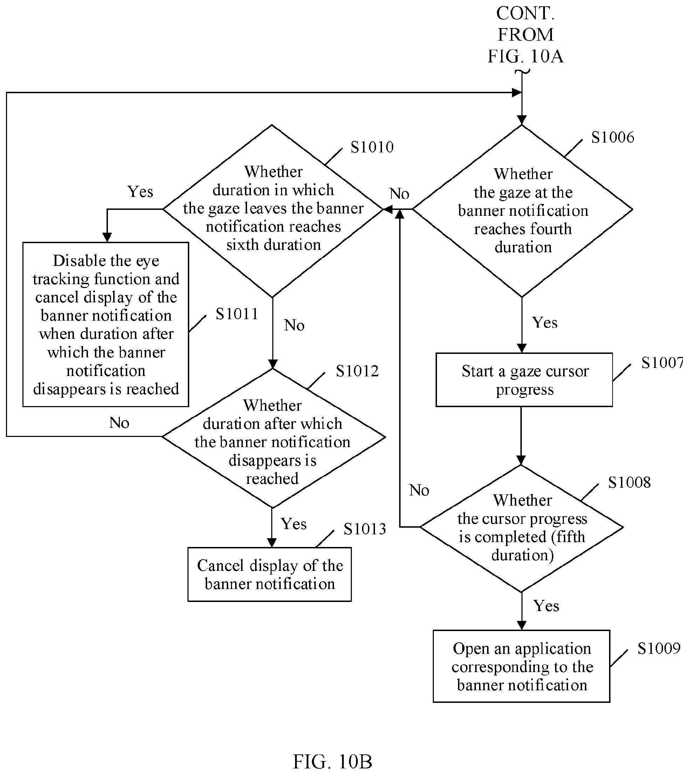

Based on the embodiments corresponding to FIG. 3A to FIG. 9E, an embodiment of this application provides a banner notification opening method. For example, FIG. 10A, FIG. 10B,

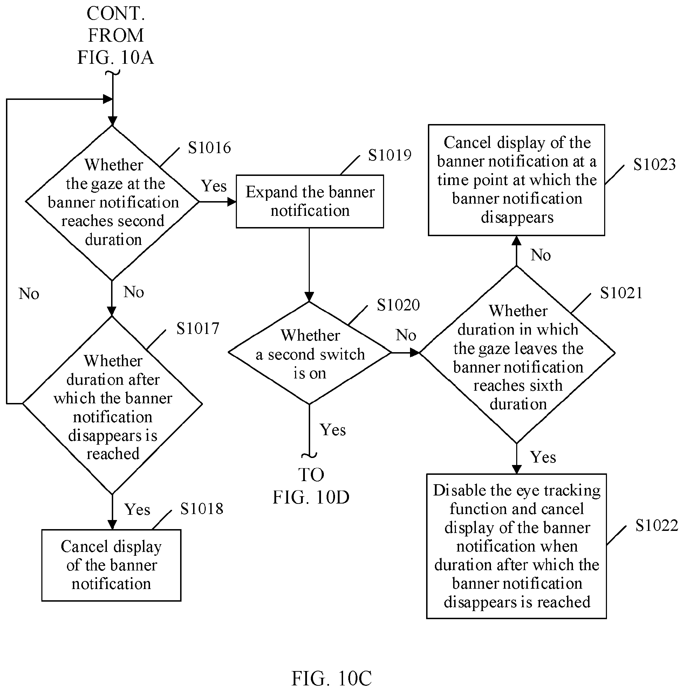

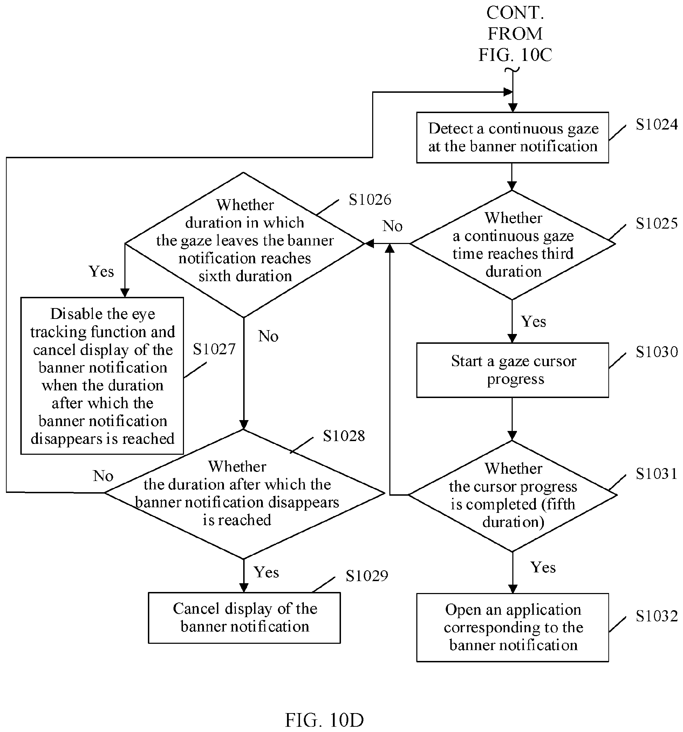

FIG. 10C, and FIG. 10D are a schematic diagram of a banner notification opening procedure according to an embodiment of this application.

As shown in FIG. 10A, FIG. 10B, FIG. 10C, and FIG. 10D, the banner notification opening method may include the following steps.

S1001: A terminal device displays a banner notification.

The banner notification may be a banner notification that supports expansion or may be a banner notification that does not support expansion. For example, when the terminal device receives a message sent by any application, the terminal device may display a banner notification corresponding to the message. The banner notification may carry an identifier used to indicate whether expansion is supported.

S1002: The terminal device determines whether the banner notification supports expansion.

When the terminal device determines that the banner notification supports expansion, the terminal device may perform a step shown in S1014. Alternatively, when the terminal device determines that the banner notification does not support expansion, the terminal device may perform a step shown in S1003.

S1003: The terminal device determines whether a second switch is on.

For a meaning of the second switch, refer to the descriptions of the embodiment corresponding to FIG. 3A, FIG. 3B, FIG. 3C, and FIG. 3D. Details are not described herein again.

When the terminal device determines that the second switch is on, the terminal device may perform a step shown in S1005. Alternatively, when the terminal device determines that the second switch is not on, the terminal device may perform a step shown in S1004.

S1004: The terminal device does not enable an eye tracking function.

It may be understood that the terminal device may cancel display of the banner notification when the eye tracking function is not enabled and the terminal device determines that duration in which the banner notification is displayed reaches duration after which the banner notification disappears.

S1005: The terminal device enables the eye tracking function and detects a gaze at the banner notification.

Detecting the gaze at the banner notification may be understood as that the terminal device detects that a gaze point of the user is in a region in which the banner notification is located. For example, the terminal device may display the interface shown in FIG. 8B, when enabling the eye tracking function and detecting the gaze at the banner notification.

S1006: The terminal device determines whether the gaze at the banner notification reaches fourth duration.

When the fourth duration is 500 milliseconds and the terminal device determines that the gaze at the banner notification reaches 500 milliseconds or the like, the terminal device may perform a step shown in S1007. Alternatively, when the terminal device determines that the gaze at the banner notification does not reach 500 milliseconds or the like, the terminal device may perform a step shown in S1010. That the gaze at the banner notification reaches 500 milliseconds may be understood as that duration in which the gaze point is in the region in which the banner notification is located is greater than or equal to 500 milliseconds. That the gaze at the banner notification does not reach 500 milliseconds may be understood as that duration in which the gaze point is in the region in which the banner notification is located is less than 500 milliseconds.

S1007: The terminal device starts a gaze cursor progress.

The gaze cursor progress may be understood as the progress bar for starting to display the gaze cursor described in the embodiments corresponding to FIG. 5A to FIG. 8E. For example, the terminal device may display, in a process of starting the gaze cursor progress, the interface shown in FIG. 8C.

S1008: The terminal device determines whether the cursor progress is completed (fifth duration).

The fifth duration may be 800 milliseconds. When the terminal device determines that the cursor progress is completed, the terminal device may perform a step shown in S1009. Alternatively, when the terminal device determines that the cursor progress is not completed, the terminal device may perform a step shown in S1010.

S1009: The terminal device opens an application corresponding to the banner notification.

For example, the terminal device may display the interface shown in FIG. 8D, when opening the application corresponding to the banner notification.

S1010: The terminal device determines whether duration in which the gaze leaves the banner notification reaches sixth duration.

When the sixth duration is 1 second and the terminal device determines that the duration in which the gaze leaves the banner notification reaches 1 second, it may be understood that the user currently may not need to open the banner notification by using the eye tracking function. Therefore, the terminal device may perform a step shown in S1011. Alternatively, when the terminal device determines that the duration in which the gaze leaves the banner notification does not reach 1 second, it may be understood that the user may need to continue to open the banner notification by using the eye tracking function, and only deviate a line of sight briefly. Therefore, the terminal device may perform a step shown in S1012.

S1011: The terminal device disables the eye tracking function and cancels display of the banner notification when the duration after which the banner notification disappears is reached.

The terminal device may cancel display of the gaze cursor when determining to disable the eye tracking function.

S1012: The terminal device determines whether the duration after which the banner notification disappears is reached.

The duration after which the banner notification disappears may be alternatively first duration. When the terminal device determines that the duration in which the banner notification is displayed reaches the duration after which the banner notification disappears, the terminal device may perform a step shown in S1013. Alternatively, when the terminal device determines that the duration in which the banner notification is displayed does not reach the duration after which the banner notification disappears, the terminal device may perform the step shown in S1005 and continue to detect a status in which the user gazes at the banner notification.

For example, when duration after which the banner notification disappears is 5 seconds and the terminal device detects, in a fourth second of display of the banner notification, that the user gazes at the banner and the gaze at the banner notification reaches 500 milliseconds, the terminal device may start the gaze cursor progress again, and open the application corresponding to the banner notification when the cursor progress is completed.

In a possible implementation, when the duration after which the banner notification disappears is 5 seconds and the terminal device detects, in the fourth second of display of the banner notification, that the user gazes at the banner and the gaze at the banner notification reaches 500 milliseconds, the terminal device may start the gaze cursor progress again. Further, when the terminal device detects that a time in which the gaze leaves the banner notification does not reach 1 second but the duration in which the banner notification is displayed is about 5.5 seconds that exceeds, by 5 seconds, the duration after which the banner notification disappears, the terminal device may cancel display of the banner notification and the gaze cursor.

S1013: The terminal device cancels display of the banner notification.

A process of opening the banner notification after the terminal device cancels display of the banner notification is interrupted. In this case, the gaze cursor disappears accordingly if exists on the interface. During a next time of detecting the banner notification, the terminal device may start again the process of opening the banner notification.

S1014: The terminal device determines whether a first switch is on.

For a meaning of the first switch, refer to the descriptions of the embodiment corresponding to FIG. 3A, FIG. 3B, FIG. 3C, and FIG. 3D. Details are not described herein again.

When the terminal device determines that the first switch is on, the terminal device may perform a step shown in S1015. Alternatively, when the terminal device determines that the first switch is not on, the terminal device may perform the step shown in S1003.

S1015: The terminal device enables the eye tracking function and detects the gaze at the banner notification.

For example, the terminal device may display the interface shown in FIG. 5B (or FIG. 6A), when enabling the eye tracking function and detecting that the gaze point is in the region in which the banner notification is located.

S1016: The terminal device determines whether the gaze at the banner notification reaches second duration.

When the second duration is 500 milliseconds and the terminal device determines that the gaze at the banner notification reaches 500 milliseconds or the like, the terminal device may perform a step shown in S1019. Alternatively, when the terminal device determines that the gaze at the banner notification does not reach 500 milliseconds or the like, the terminal device may perform a step shown in S1017.

S1017: The terminal device determines whether the duration after which the banner notification disappears is reached.

When the terminal device determines that the duration in which the banner notification is displayed reaches the duration after which the banner notification disappears, the terminal device may perform a step shown in S1018. Alternatively, when the terminal device determines that the duration in which the banner notification is displayed does not reach the duration after which the banner notification disappears, the terminal device may perform the step shown in S1015 and continue to detect a status in which the user gazes at the banner notification.

S1018: The terminal device cancels display of the banner notification.

S1019: The terminal device expands the banner notification.

For example, the terminal device may display the interface shown in FIG. 5C (or FIG. 6B), when expanding the banner notification.

S1020: The terminal device determines whether the second switch is on.

When the terminal device determines that the second switch is on, the terminal device may perform a step shown in S1024. Alternatively, when the terminal device determines that the second switch is not on, the terminal device may perform a step shown in S1021.

When the terminal device determines that the second switch is not on, regardless of how to gaze at the banner notification, the terminal device does not open the application corresponding to the banner notification. Therefore, the terminal device may perform steps shown in S1021 to S1023, and perform a process of canceling display of the banner notification.

S1021: The terminal device determines whether the duration in which the gaze leaves the banner notification reaches the sixth duration.

When the sixth duration is 1 second and the terminal device determines that the duration in which the gaze leaves the banner notification reaches 1 second, the terminal device may perform a step shown in S1022. Alternatively, when the terminal device determines that the duration in which the gaze leaves the banner notification does not reach 1 second, the terminal device may perform a step shown in S1023.

S1022: The terminal device disables the eye tracking function and cancels display of the banner notification when the duration after which the banner notification disappears is reached.

S1023: The terminal device cancels display of the banner notification at a time point at which the banner notification disappears.

S1024: The terminal device detects the continuous gaze at the banner notification.

S1025: The terminal device determines whether a continuous gaze time reaches third duration.

When the third duration is 2 seconds and the terminal device determines that the continuous gaze time reaches 2 seconds, the terminal device may perform a step shown in S1030. Alternatively, when the terminal device determines that the continuous gaze time does not reach 2 seconds, the terminal device may perform a step shown in S1026.

S1026: The terminal device determines whether the duration in which the gaze leaves the banner notification reaches the sixth duration.

When the sixth duration is 1 second and the terminal device determines that the duration in which the gaze leaves the banner notification reaches 1 second, the terminal device may perform a step shown in S1027. Alternatively, when the terminal device determines that the duration in which the gaze leaves the banner notification does not reach 1 second, the terminal device may perform a step shown in S1028.

S1027: The terminal device disables the eye tracking function and cancels display of the banner notification when the duration after which the banner notification disappears is reached.

S1028: The terminal device determines whether the duration after which the banner notification disappears is reached.

When the terminal device determines that the duration in which the banner notification is displayed reaches the duration after which the banner notification disappears, the terminal device may perform a step shown in S1029. Alternatively, when the terminal device determines that the duration in which the banner notification is displayed does not reach the duration after which the banner notification disappears, the terminal device may perform the step shown in S1024 and continue to detect a status in which the user gazes at the banner notification.

S1029: The terminal device cancels display of the banner notification.

S1030: The terminal device starts a gaze cursor progress.

For example, the terminal device may display the interface shown in FIG. 5D, in a process of starting the gaze cursor progress.

S1031: The terminal device determines whether the cursor progress is completed (fifth duration). When the terminal device determines that the cursor progress is completed, the terminal device may perform a step shown in S1032. Alternatively, when the terminal device determines that the cursor progress is not completed, the terminal device may perform a step shown in S1026.

S1032: The terminal device opens an application corresponding to the banner notification.

For example, the terminal device may display the interface shown in FIG. 5E, when determining to open the application corresponding to the banner notification.

In a possible implementation, in any step of S1002 to S1032, when the terminal device detects that the user triggers the terminal device by using a finger, a mouse, or the like, the terminal device may interrupt a process of opening the banner notification, and continue to perform at least one step of S1002 to S1032 during a next time of detecting a banner notification. It may be understood that, in an execution process of the eye tracking function, a priority of a trigger operation of the user is higher than a running priority of the eye tracking function.

In a possible implementation, when the terminal device detects that the user turns off the first switch and the second switch when the banner notification pops up (or in a process in which the banner notification pops up), the terminal device does not detect a gaze status of the user. Alternatively, when the terminal device detects that the user turns on the first switch or the second switch when the banner notification pops up (or in a process in which the banner notification pops up), the terminal device may detect a gaze status of the user. It may be understood that in a process in which the banner notification appears, the terminal device may constantly detect statuses of the first switch and the second switch, and determine, based on the statuses of the first switch and the second switch, whether to respond to the gaze of the user.

In a possible implementation, the terminal device in a landscape mode pops up a banner notification. When the terminal device switches from the landscape mode to a portrait mode, the banner notification does not reach the duration after which the banner notification disappears, and the terminal device may continue to detect the gaze status of the user. It may be understood that switching between the landscape mode and the portrait mode does not affect the default duration after which the banner notification disappears.

On this basis, an embodiment of this application provides a banner notification opening method, so that a terminal device can flexibly expand a banner notification and/or open an application interface corresponding to the banner notification when detecting that a gaze position of a user is in a region in which the banner notification is located and gaze duration meets a specific condition, thereby improving use experience of using the eye tracking function by the user.

With reference to the descriptions in the embodiments corresponding to FIG. 3A to FIG. 10D, the banner notification opening method provided in this embodiment of this application is not limited to opening a banner notification of a social application and a banner notification of the Messages application, and may be further applied to opening a banner notification of another type of application such as a banner notification of a news application or a banner notification of a short video application. This is not specifically limited in this embodiment of this application. In addition, the banner notification opening method provided in this embodiment of this application may also be applied to expanding any notification from a notification bar and/or opening an application interface corresponding to any notification. This is not limited in this embodiment of this application.

It may be understood that the banner notification opening method provided in this embodiment of this application does not affect display logic of a current banner notification on the terminal device. For example, when the terminal device detects a new banner notification in a process of opening an old banner notification (for example, performing any step shown in S901 to S932), the new banner notification is normally displayed, and a process of opening the old banner notification fails. In this case, the user may interact with the new banner notification through eye movement.

It should be noted that user information (including but not limited to user equipment information, user personal information, and the like) and data (including but not limited to data used for analysis, stored data, displayed data, and the like) involved in this application are all information and data that are authorized by the user or that are fully authorized by each party. In addition, collection, use, and processing of the related data need to comply with relevant laws, regulations, and standards, and a corresponding operation entry is provided for the user to choose to authorize or reject.

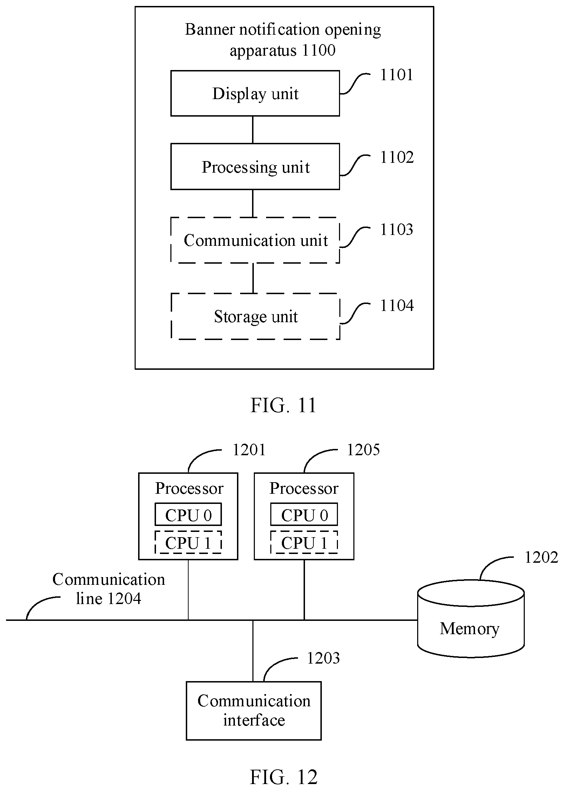

The method provided in embodiments of this application is described above with reference to FIG. 3A to FIG. 10D, and an apparatus for performing the method in embodiments of this application is described below. As shown in FIG. 11, FIG. 11 is a schematic diagram of a structure of a banner notification opening apparatus according to an embodiment of this application. The banner notification opening apparatus may be a terminal device in embodiments of this application, or may be a chip or a chip system in a terminal device.

As shown in FIG. 11, the banner notification opening apparatus 1100 may be used in a communication device, a circuit, a hardware component, or a chip; and the banner notification opening apparatus includes a display unit 1101 and a processing unit 1102. The display unit 1101 is configured to support the banner notification opening apparatus 1100 in performing a display step. The processing unit 1102 is configured to support the banner notification opening apparatus 1100 in performing an information processing step.

Specifically, this embodiment of this application provides the banner notification opening apparatus 1100. The banner opening apparatus 1100 includes the display unit 1101 and the processing unit 1102. The display unit 1101 is configured to display a first interface. The first interface includes a first banner notification. The first banner notification is in a first region. The first banner notification is a banner notification initiated by a first application. When the processing unit 1102 detects that a gaze point is in the first region, the display unit 1101 is further configured to display a second banner notification on the first interface. The second banner notification is an expanded first banner notification. Message content in the second banner notification is more than message content in the first banner notification. Alternatively, when the processing unit 1102 detects that a gaze point is in the first region, the display unit 1101 is further configured to display a second interface. The second interface is a displayed interface of the first application. The second interface includes message content in a second banner notification.

In a possible implementation, the banner notification opening apparatus 1100 may also include a communication unit 1103. Specifically, the communication unit is configured to support the banner notification opening apparatus 1100 in performing data sending and data receiving steps. For example, the communication unit 1103 may be an input or output interface, a pin, or a circuit.

In a possible embodiment, the banner notification opening apparatus may further include a storage unit 1104. The processing unit 1102 is connected to the storage unit 1104 through a line. The storage unit 1104 may include one or more memories. The memory may be one or more components configured to store a program or data in a device or a circuit. The storage unit 1104 may exist independently, and is connected to the processing unit 1102 included in the banner notification opening apparatus through a communication line. The storage unit 1104 may be alternatively integrated with the processing unit 1102.

The storage unit 1104 may store computer-executable instructions of the method in a terminal device, so that the processing unit 1102 performs the method in the foregoing embodiments. The storage unit 1104 may be a register, a cache, a RAM, or the like, and the storage unit 1104 may be integrated with the processing unit 1102. The storage unit 1104 may be a read-only memory (read-only memory, ROM) or another type of static storage device that may store static information and instructions. The storage unit 1104 may be independent of the processing unit 1102.

FIG. 12 is a schematic diagram of a hardware structure of another terminal device according to an embodiment of this application. As shown in FIG. 12, the terminal device includes a processor 1201, a communication line 1204, and at least one communication interface (a communication interface 1203 is used as an example for description in FIG. 12).

The processor 1201 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 1204 may include a circuit for transferring information between the foregoing components.

The communication interface 1203 is any apparatus such as a transceiver, and is configured to communicate with another device or communication network such as the Ethernet, or a wireless local area network (wireless local area networks, WLAN).

Possibly, the terminal device may further include a memory 1202.

The memory 1202 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used to carry or store expected program code in a form of an instruction or a data structure and that can be accessed by a computer, but not limited thereto. The memory may exist independently, and is connected to the processor through the communication line 1204. The memory may be alternatively integrated with the processor.

The memory 1202 is configured to store computer-executable instructions for performing the solutions of this application, and the processor 1201 controls execution. The processor 1201 is configured to execute the computer-executable instructions stored in the memory 1202, to implement the method provided in embodiments of this application.

Possibly, the computer-executable instructions in this embodiment of this application may also be referred to as application code. This is not specifically limited in this embodiment of this application.

During specific implementation, in an embodiment, the processor 1201 may include one or more CPUs, for example, a CPU 0 and a CPU 1 in FIG. 12.

During specific implementation, in an embodiment, the terminal device may include one or more processors, for example, a processor 1201 and a processor 1205 in FIG. 12. Each of these processors may be a single-core (single-CPU) processor, or may be a multi-core (multi-CPU) processor. The processor herein may be one or more devices, circuits, and/or processing cores configured to process data (for example, computer program instructions).

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be stored in a computer, or a data storage device such as a server or a data center into which one or more usable media are integrated. For example, the usable medium may include a magnetic medium (for example, a floppy disk, a hard disk, or a magnetic tape), an optical medium (for example, a digital versatile disc (digital versatile disc, DVD)), or a semiconductor medium (for example, a solid state disk (solid state disk, SSD)).

An embodiment of this application further provides a computer-readable storage medium. All or some of the methods described in the foregoing embodiments may be implemented by software, hardware, firmware, or any combination thereof. The computer-readable medium may include a computer storage medium and a communication medium, and may further include any medium that can transfer a computer program from one place to another place. The storage medium may be any target medium accessible to a computer.

In a possible design, the computer-readable medium may include a compact disc read-only memory (compact disc read-only memory, CD-ROM), a RAM, a ROM, an EEPROM, or another optical disc memory. The computer-readable medium may include a magnetic disk memory or another magnetic disk storage device. In addition, any connection line may be appropriately referred to as a computer-readable medium. For example, if software is transmitted from a website, a server, or another remote source by using a coaxial cable, an optical fiber cable, a twisted pair, a DSL, or a wireless technology (such as infrared, radio, or microwave), the coaxial cable, the optical fiber cable, the twisted pair, the DSL, or the wireless technology such as the infrared, the radio, or the microwave is included in a definition of a medium. A magnetic disk and an optical disc used herein include a compact disc (CD), a laser disc, an optical disc, a digital versatile disc (digital versatile disc, DVD), a floppy disk, and a blue ray disc. The magnetic disk usually reproduces data in a magnetic manner, and the optical disc reproduces data optically by using laser.

The foregoing combination should also be included in the scope of the computer-readable medium. The foregoing descriptions are merely specific implementations of the present invention, but the protection scope of the present invention is not limited thereto. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A banner notification opening method, wherein the method comprises:
displaying (S1001), by a terminal device, a first interface, wherein the first interface comprises a first banner notification (301, 304), the first banner notification (301, 304) is in a first region, and the first banner notification (301, 304) is a banner notification initiated by a first application; and
displaying, by the terminal device, a second banner notification on the first interface instead of the first banner notification (301, 304) when the terminal device detects that a gaze point is in the first region, wherein the second banner notification is an expanded first banner notification (301, 304), and wherein a message content in the second banner notification is more than a message content in the first banner notification (301, 304); or
displaying, by the terminal device, a second interface when the terminal device detects that a gaze point is in the first region, wherein the second interface is a displayed interface of the first application, and the second interface comprises the message content in the second banner notification; **characterized by**
displaying, by the terminal device, a gaze cursor (501, 601, 801, 901) on the first interface when the terminal device detects that the gaze point is in a preset region, wherein the preset region comprises the first region, the preset region is 1/3 of the display, and the gaze cursor (501, 601, 801, 901) is used to indicate the position of the gaze point on the display, wherein the terminal cancels displaying the gaze cursor when the gaze point leaves the preset region, wherein when the gaze point leaves the preset region, the terminal determines that the user no longer needs to open a banner notification based on the gaze status,
wherein a first switch (308) and a second switch (309) can be displayed by the terminal device in a third interface covering the complete screen; whereby when the first switch (308) is in an on state, for the first banner notification (301, 304) that supports expansion, the terminal device expands the first banner notification (301, 304) when detecting that the gaze point is in the first region, and whereby when the second switch (309) is in an on state, in case the first banner notification (301, 304) supports expansion and in case the first banner notification (301, 304) does not support expansion, the terminal device displays the first application on the complete screen when detecting that the gaze point is in the first region or a second region, and wherein the second region is a region in which the second banner notification is located.

2. The method according to claim 1, wherein the method further comprises:
displaying, by the terminal device, the second interface after displaying the second banner notification on the first interface when the first banner notification (301, 304) supports expansion and the terminal device detects that the gaze point is in the first region,
wherein the displaying the second interface after displaying the second banner notification comprises: when the first switch (308) is on, the second switch (309) is on, the first banner notification (301, 304) supports expansion, and the terminal device detects that the gaze point is in the first region, displaying, by the terminal device, the second interface after displaying the second banner notification on the first interface.

3. The method according to claim 1 or 2, wherein the method further comprises:
when the duration of displaying the first banner notification (301, 304) is greater than or equal to a first duration, canceling (S1013), by the terminal device, display of the first banner notification (301, 304); or when a total duration of displaying the first banner notification (301, 304) and the second banner notification is greater than or equal to the first duration, canceling, by the terminal device, display of the second banner notification.

4. The method according to claim 2, wherein the displaying, by the terminal device, the second interface after displaying the second banner notification on the first interface, when the terminal device detects that the gaze point is in the first region comprises:
displaying (S1019), by the terminal device, the second banner notification on the first interface when the terminal device detects that a duration in which the gaze point is in the first region is greater than or equal to a second duration; and
after the terminal device displays the second banner notification, displaying, by the terminal device, the second interface when the terminal device detects that a duration in which the gaze point is in the second region is greater than or equal to a seventh duration.

5. The method according to claim 4, wherein the seventh duration comprises a
third duration and a fifth duration; and
the displaying, by the terminal device, the second interface when the terminal device detects that a duration in which the gaze point is in the second region is greater than or equal to a seventh duration comprises:
when the terminal device detects that the duration in which the gaze point is in the second region is greater than or equal to the third duration, displaying (S1030), by the terminal device, a first progress bar at a start position on an outer side of the gaze cursor (501, 601, 801, 901); and
after the terminal device displays the first progress bar at the start position, when the terminal device detects that the duration in which the gaze point is in the second region is greater than or equal to the fifth duration, displaying, by the terminal device, the first progress bar at an end position on an outer side of the gaze point, and further displaying (S1032) the second interface.

6. The method according to claim 4 or 5, wherein the displaying, by the terminal device, a second banner notification on the first interface when the terminal device detects that a gaze point is in the first region comprises:
displaying, by the terminal device, the second banner notification on the first interface when the first switch (308) is on, the second switch (309) is off, the first banner notification (301, 304) supports expansion, and the terminal device detects that the gaze point is in the first region.

7. The method according to any one of claims 4 to 6, wherein the displaying, by the terminal device, a second interface when the terminal device detects that a gaze point is in the first region comprises:
displaying, by the terminal device, the second interface when the terminal device determines that a preset condition is met and the terminal device detects that the gaze point is in the first region, wherein the preset condition comprises: that the first switch (308) is off, the second switch (309) is on, and the first banner notification (301, 304) supports expansion; or that the first switch (308) is on, the second switch (309) is on, and the first banner notification (301, 304) does not support expansion; or that the first switch (308) is off, the second switch (309) is on, and the first banner notification (301, 304) does not support expansion.

8. The method according to claim 7, wherein the displaying, by the terminal device, the second interface when the terminal device detects that the gaze point is in the first region comprises:
displaying, by the terminal device, the second interface when the terminal device detects that the duration in which the gaze point is in the first region is greater than or equal to eighth duration.

9. The method according to claim 1, wherein a third switch (310) is disposed in the terminal device, the third switch (310) is configured to enable or disable display of the gaze cursor (501, 601, 801, 901), and the displaying, by the terminal device, the gaze cursor (501, 601, 801, 901) on the first interface when the terminal device detects that the gaze point is in the preset region comprises:
when the terminal device detects that the gaze point is in the preset region and the third switch (310) is on, displaying, by the terminal device, the gaze cursor (501, 601, 801, 901) on the first interface.

10. A terminal device, comprising a processor (110, 1201, 1205), wherein the processor (110, 1201, 1205) is coupled to a memory (121, 1202), the memory (121, 1202) is configured to store a computer program, and when the processor invokes the computer program, the terminal device is enabled to perform the following steps:
displaying, by a terminal device, a first interface, wherein the first interface comprises a first banner notification (301, 304), the first banner notification (301, 304) is in a first region, and the first banner notification (301, 304) is a banner notification initiated by a first application; and
displaying, by the terminal device, a second banner notification on the first interface instead of the first banner notification (301, 304) when the terminal device detects that a gaze point is in the first region, wherein the second banner notification is an expanded first banner notification (301, 304), and wherein
a message content in the second banner notification is more than a message content in the first banner notification (301, 304); or
displaying, by the terminal device, a second interface when the terminal device detects that a gaze point is in the first region, wherein the second interface is a displayed interface of the first application, and the second interface comprises the message content in the second banner notification;
**characterized by**
displaying, by the terminal device, a gaze cursor (501, 601, 801, 901) on the first interface when the terminal device detects that the gaze point is in a preset region, wherein the preset region comprises the first region, the preset region is 1/3 of the display, and the gaze cursor (501, 601, 801, 901) is used to indicate the position of the gaze point on the display, wherein the terminal cancels displaying the gaze cursor when the gaze point leaves the preset region, wherein when the gaze point leaves the preset region, the terminal determines that the user no longer needs to open a banner notification based on the gaze status,
wherein a first switch (308) and a second switch (309) can be displayed by the terminal device in a third interface covering the complete screen; whereby
when the first switch (308) is in an on state, for the first banner notification (301, 304) that supports expansion, the terminal device expands the first banner notification (301, 304) when detecting that the gaze point is in the first region, and whereby
when the second switch (309) is in an on state, in case the first banner notification (301, 304) supports expansion and in case the first banner notification (301, 304) does not support expansion, the terminal device displays the first application on the complete screen when detecting that the gaze point is in the first region or a second region, and wherein the second region is a region in which the second banner notification is located.

11. A computer storage medium, comprising
a computer program, which when executed by a processor (110, 1201, 1205), cause the processor (110, 1201, 1205) to perform operations comprising:
displaying, by a terminal device, a first interface, wherein the first interface comprises a first banner notification (301, 304), the first banner notification (301, 304) is in a first region, and the first banner notification (301, 304) is a banner notification initiated by a first application; and
displaying, by the terminal device, a second banner notification on the first interface instead of the first banner notification (301, 304) when the terminal device detects that a gaze point is in the first region, wherein the second banner notification is an expanded first banner notification (301, 304), and wherein
a message content in the second banner notification is more than a message content in the first banner notification (301, 304); or
displaying, by the terminal device, a second interface when the terminal device detects that a gaze point is in the first region, wherein the second interface is a displayed interface of the first application, and the second interface comprises the message content in the second banner notification; **characterized by**
displaying, by the terminal device, a gaze cursor (501, 601, 801, 901) on the first interface when the terminal device detects that the gaze point is in a preset region, wherein the preset region comprises the first region, the preset region is 1/3 of the display, and the gaze cursor (501, 601, 801, 901) is used to indicate the position of the gaze point on the display, wherein the terminal cancels displaying the gaze cursor when the gaze point leaves the preset region, wherein when the gaze point leaves the preset region, the terminal determines that the user no longer needs to open a banner notification based on the gaze status,
wherein a first switch (308) and a second switch (309) can be displayed by the terminal device in a third interface covering the complete screen; whereby
when the first switch (308) is in an on state, for the first banner notification (301, 304) that supports expansion, the terminal device expands the first banner notification (301, 304) when detecting that the gaze point is in the first region, and whereby
when the second switch (309) is in an on state, in case the first banner notification (301, 304) supports expansion and in case the first banner notification (301, 304) does not support expansion, the terminal device displays the first application on the complete screen when detecting that the gaze point is in the first region or a second region, and wherein
the second region is a region in which the second banner notification is located.

## Patentansprüche

1. Verfahren zum Öffnen einer Bannerbenachrichtigung, wobei das Verfahren Folgendes umfasst:
Anzeigen (S1001), durch ein Endgerät, einer ersten Schnittstelle, wobei die erste Schnittstelle eine erste Bannerbenachrichtigung (301, 304) umfasst, die erste Bannerbenachrichtigung (301, 304) sich in einem ersten Bereich befindet und die erste Bannerbenachrichtigung (301, 304) eine durch eine erste Anwendung initiierte Bannerbenachrichtigung ist; und
Anzeigen, durch das Endgerät, einer zweiten Bannerbenachrichtigung auf der ersten Schnittstelle anstelle der ersten Bannerbenachrichtigung (301, 304), wenn das Endgerät erkennt, dass ein Blickpunkt in dem ersten Bereich liegt, wobei die zweite Bannerbenachrichtigung eine expandierte erste Bannerbenachrichtigung (301, 304) ist und wobei ein Nachrichteninhalt in der zweiten Bannerbenachrichtigung umfangreicher als ein Nachrichteninhalt in der ersten Bannerbenachrichtigung (301, 304) ist; oder
Anzeigen, durch das Endgerät, einer zweiten Schnittstelle, wenn das Endgerät erkennt, dass ein Blickpunkt in dem ersten Bereich liegt, wobei die zweite Schnittstelle eine angezeigte Schnittstelle der ersten Anwendung ist und die zweite Schnittstelle den Nachrichteninhalt in der zweiten Bannerbenachrichtigung umfasst; **gekennzeichnet durch**
Anzeigen, durch das Endgerät, eines Blickcursors (501, 601, 801, 901) auf der ersten Schnittstelle, wenn das Endgerät erkennt, dass der Blickpunkt in einem voreingestellten Bereich liegt, wobei der voreingestellte Bereich den ersten Bereich umfasst, der voreingestellte Bereich 1/3 der Anzeige ausmacht und der Blickcursor (501, 601, 801, 901) dazu verwendet wird, die Position des Blickpunkts auf der Anzeige anzugeben, wobei das Endgerät das Anzeigen des Blickcursors abbricht, wenn der Blickpunkt den voreingestellten Bereich verlässt, wobei das Endgerät, wenn der Blickpunkt den voreingestellten Bereich verlässt, basierend auf dem Blickstatus bestimmt, dass der Benutzer nicht mehr das Öffnen einer Bannerbenachrichtigung benötigt,
wobei ein erster Schalter (308) und ein zweiter Schalter (309) durch das Endgerät in einer dritten Schnittstelle, die den gesamten Bildschirm abdeckt, angezeigt werden können; wobei, wenn sich der erste Schalter (308) in einem Ein-Zustand befindet, für die erste Bannerbenachrichtigung (301, 304), die eine Expansion unterstützt, das Endgerät die erste Bannerbenachrichtigung (301, 304) expandiert, wenn es erkennt, dass der Blickpunkt im ersten Bereich liegt, und wobei, wenn sich der zweite Schalter (309) in einem Ein-Zustand befindet, falls die erste Bannerbenachrichtigung (301, 304) eine Expansion unterstützt und falls die erste Bannerbenachrichtigung (301, 304) keine Expansion unterstützt, das Endgerät die erste Anwendung auf dem gesamten Bildschirm anzeigt, wenn es erkennt, dass der Blickpunkt im ersten Bereich oder einem zweiten Bereich liegt, und wobei der zweite Bereich ein Bereich ist, in dem sich die zweite Bannerbenachrichtigung befindet.

2. Verfahren nach Anspruch 1, wobei das Verfahren ferner Folgendes umfasst:
Anzeigen, durch das Endgerät, der zweiten Schnittstelle nach dem Anzeigen der zweiten Banner-Benachrichtigung auf der ersten Schnittstelle, wenn die erste Banner-Benachrichtigung (301, 304) eine Erweiterung unterstützt und das Endgerät erkennt, dass der Blickpunkt in dem ersten Bereich liegt,
wobei das Anzeigen der zweiten Schnittstelle nach dem Anzeigen der zweiten Banner-Benachrichtigung umfasst: wenn der erste Schalter (308) eingeschaltet ist, der zweite Schalter (309) eingeschaltet ist, die erste Banner-Benachrichtigung (301, 304) eine Erweiterung unterstützt und das Endgerät erkennt, dass der Blickpunkt in dem ersten Bereich liegt, Anzeigen, durch das Endgerät, der zweiten Schnittstelle nach dem Anzeigen der zweiten Banner-Benachrichtigung auf der ersten Schnittstelle.

3. Verfahren nach Anspruch 1 oder 2, wobei das Verfahren ferner umfasst:
wenn die Dauer des Anzeigens der ersten Banner-Benachrichtigung (301, 304) größer als oder gleich einer ersten Dauer ist, Beenden (S1013), durch das Endgerät, der Anzeige der ersten Banner-Benachrichtigung (301, 304); oder wenn eine Gesamtdauer des Anzeigens der ersten Banner-Benachrichtigung (301, 304) und der zweiten Banner-Benachrichtigung größer als oder gleich der ersten Dauer ist, Beenden, durch das Endgerät, der Anzeige der zweiten Banner-Benachrichtigung.

4. Verfahren nach Anspruch 2, wobei das Anzeigen, durch das Endgerät, der zweiten Schnittstelle nach dem Anzeigen der zweiten Banner-Benachrichtigung auf der ersten Schnittstelle, wenn das Endgerät erkennt, dass der Blickpunkt in dem ersten Bereich liegt, umfasst:
Anzeigen (S1019), durch das Endgerät, der zweiten Banner-Benachrichtigung auf der ersten Schnittstelle, wenn das Endgerät erkennt, dass eine Dauer, in der sich der Blickpunkt in dem ersten Bereich befindet, größer als oder gleich einer zweiten Dauer ist; und
nachdem das Endgerät die zweite Banner-Benachrichtigung anzeigt, Anzeigen, durch das Endgerät, der zweiten Schnittstelle, wenn das Endgerät erkennt, dass eine Dauer, in der sich der Blickpunkt in dem zweiten Bereich befindet, größer als oder gleich einer siebten Dauer ist.

5. Verfahren nach Anspruch 4, wobei die siebte Dauer eine dritte Dauer und eine fünfte Dauer umfasst; und
das Anzeigen, durch das Endgerät, der zweiten Schnittstelle, wenn das Endgerät erkennt, dass eine Dauer, in der sich der Blickpunkt in dem zweiten Bereich befindet, größer als oder gleich einer siebten Dauer ist, umfasst:
wenn das Endgerät erkennt, dass die Dauer, in der sich der Blickpunkt in dem zweiten Bereich befindet, größer als oder gleich der dritten Dauer ist, Anzeigen (S1030), durch das Endgerät, eines ersten Fortschrittsbalkens an einer Startposition auf einer Außenseite des Blickcursors (501, 601, 801, 901); und
Nachdem das Endgerät den ersten Fortschrittsbalken an der Startposition anzeigt, wenn das Endgerät erkennt, dass die Dauer, in der sich der Blickpunkt in der zweiten Region befindet, größer als oder gleich der fünften Dauer ist, Anzeigen, durch das Endgerät, des ersten Fortschrittsbalkens an einer Endposition an einer Außenseite des Blickpunkts, und ferner Anzeigen (S1032) der zweiten Schnittstelle.

6. Verfahren nach Anspruch 4 oder 5, wobei das Anzeigen, durch das Endgerät, einer zweiten Banner-Benachrichtigung auf der ersten Schnittstelle, wenn das Endgerät erkennt, dass sich ein Blickpunkt in der ersten Region befindet, umfasst:
Anzeigen, durch das Endgerät, der zweiten Banner-Benachrichtigung auf der ersten Schnittstelle, wenn der erste Schalter (308) eingeschaltet ist, der zweite Schalter (309) ausgeschaltet ist, die erste Banner-Benachrichtigung (301, 304) eine Erweiterung unterstützt und das Endgerät erkennt, dass sich der Blickpunkt in der ersten Region befindet.

7. Verfahren nach einem der Ansprüche 4 bis 6, wobei das Anzeigen, durch das Endgerät, einer zweiten Schnittstelle, wenn das Endgerät erkennt, dass sich ein Blickpunkt in der ersten Region befindet, umfasst:
Anzeigen, durch das Endgerät, der zweiten Schnittstelle, wenn das Endgerät bestimmt, dass eine voreingestellte Bedingung erfüllt ist und das Endgerät erkennt, dass sich der Blickpunkt in der ersten Region befindet, wobei die voreingestellte Bedingung umfasst: dass der erste Schalter (308) ausgeschaltet ist, der zweite Schalter (309) eingeschaltet ist und die erste Banner-Benachrichtigung (301, 304) eine Erweiterung unterstützt; oder dass der erste Schalter (308) eingeschaltet ist, der zweite Schalter (309) eingeschaltet ist und die erste Banner-Benachrichtigung (301, 304) keine Erweiterung unterstützt; oder dass der erste Schalter (308) ausgeschaltet ist, der zweite Schalter (309) eingeschaltet ist und die erste Banner-Benachrichtigung (301, 304) keine Erweiterung unterstützt.

8. Verfahren nach Anspruch 7, wobei das Anzeigen, durch das Endgerät, der zweiten Schnittstelle, wenn das Endgerät erkennt, dass sich der Blickpunkt in der ersten Region befindet, umfasst:
Anzeigen, durch das Endgerät, der zweiten Schnittstelle, wenn das Endgerät erkennt, dass die Dauer, in der sich der Blickpunkt in der ersten Region befindet, größer als oder gleich der achten Dauer ist.

9. Verfahren nach Anspruch 1, wobei ein dritter Schalter (310) in dem Endgerät angeordnet ist, der dritte Schalter (310) konfiguriert ist, um die Anzeige des Blick-Cursors (501, 601, 801, 901) zu aktivieren oder zu deaktivieren, und das Anzeigen, durch das Endgerät, des Blick-Cursors (501, 601, 801, 901) auf der ersten Schnittstelle, wenn das Endgerät erkennt, dass sich der Blickpunkt in der voreingestellten Region befindet, umfasst:
wenn das Endgerät erkennt, dass sich der Blickpunkt in der voreingestellten Region befindet und der dritte Schalter (310) eingeschaltet ist, Anzeigen, durch das Endgerät, des Blick-Cursors (501, 601, 801, 901) auf der ersten Schnittstelle.

10. Ein Endgerät, umfassend einen Prozessor (110, 1201, 1205), wobei der Prozessor (110, 1201, 1205) mit einem Speicher (121, 1202) gekoppelt ist, wobei der Speicher (121, 1202) konfiguriert ist, um ein Computerprogramm zu speichern, und wenn der Prozessor das Computerprogramm aufruft, das Endgerät befähigt ist, die folgenden Schritte auszuführen:
Anzeigen, durch ein Endgerät, einer ersten Benutzeroberfläche, wobei die erste Benutzeroberfläche eine erste Banner-Benachrichtigung (301, 304) umfasst, die erste Banner-Benachrichtigung (301, 304) sich in einem ersten Bereich befindet und die erste Banner-Benachrichtigung (301, 304) eine durch eine erste Anwendung initiierte Banner-Benachrichtigung ist; und
Anzeigen, durch das Endgerät, einer zweiten Banner-Benachrichtigung auf der ersten Benutzeroberfläche anstelle der ersten Banner-Benachrichtigung (301, 304), wenn das Endgerät erkennt, dass sich ein Blickpunkt im ersten Bereich befindet, wobei die zweite Banner-Benachrichtigung eine erweiterte erste Banner-Benachrichtigung (301, 304) ist und wobei ein Nachrichteninhalt in der zweiten Banner-Benachrichtigung mehr als ein Nachrichteninhalt in der ersten Banner-Benachrichtigung (301, 304) ist; oder
Anzeigen, durch das Endgerät, einer zweiten Benutzeroberfläche, wenn das Endgerät erkennt, dass sich ein Blickpunkt im ersten Bereich befindet, wobei die zweite Benutzeroberfläche eine angezeigte Benutzeroberfläche der ersten Anwendung ist und die zweite Benutzeroberfläche den Nachrichteninhalt in der zweiten Banner-Benachrichtigung umfasst; **gekennzeichnet durch**
Anzeigen, durch das Endgerät, eines Blick-Cursors (501, 601, 801, 901) auf der ersten Benutzeroberfläche, wenn das Endgerät erkennt, dass sich der Blickpunkt in einem vordefinierten Bereich befindet, wobei der vordefinierte Bereich den ersten Bereich umfasst, der vordefinierte Bereich 1/3 der Anzeige ist und der Blick-Cursor (501, 601, 801, 901) verwendet wird, um die Position des Blickpunkts auf der Anzeige anzugeben, wobei das Endgerät die Anzeige des Blick-Cursors einstellt, wenn der Blickpunkt den vordefinierten Bereich verlässt, wobei das Endgerät, wenn der Blickpunkt den vordefinierten Bereich verlässt, basierend auf dem Blickstatus bestimmt, dass der Benutzer eine Banner-Benachrichtigung nicht mehr öffnen muss,
wobei ein erster Schalter (308) und ein zweiter Schalter (309) durch das Endgerät in einer dritten Benutzeroberfläche angezeigt werden können, die den vollständigen Bildschirm abdeckt; wodurch
wenn sich der erste Schalter (308) in einem Ein-Zustand befindet, erweitert das Endgerät für die erste Banner-Benachrichtigung (301, 304), die eine Erweiterung unterstützt, die erste Banner-Benachrichtigung (301, 304), wenn es erkennt, dass sich der Blickpunkt im ersten Bereich befindet, und wobei, wenn sich der zweite Schalter (309) in einem Ein-Zustand befindet, falls die erste Banner-Benachrichtigung (301, 304) eine Erweiterung unterstützt und falls die erste Banner-Benachrichtigung (301, 304) keine Erweiterung unterstützt, das Endgerät die erste Anwendung auf dem gesamten Bildschirm anzeigt, wenn es erkennt, dass sich der Blickpunkt im ersten Bereich oder einem zweiten Bereich befindet, und wobei der zweite Bereich ein Bereich ist, in dem sich die zweite Banner-Benachrichtigung befindet.

11. Computerlesbares Speichermedium, umfassend
ein Computerprogramm, das, wenn es von einem Prozessor (110, 1201, 1205) ausgeführt wird, den Prozessor (110, 1201, 1205) veranlasst, Operationen durchzuführen, die Folgendes umfassen:
Anzeigen, durch ein Endgerät, einer ersten Schnittstelle, wobei die erste Schnittstelle eine erste Banner-Benachrichtigung (301, 304) umfasst, sich die erste Banner-Benachrichtigung (301, 304) in einem ersten Bereich befindet und die erste Banner-Benachrichtigung (301, 304) eine durch eine erste Anwendung initiierte Banner-Benachrichtigung ist; und
Anzeigen, durch das Endgerät, einer zweiten Banner-Benachrichtigung auf der ersten Schnittstelle anstelle der ersten Banner-Benachrichtigung (301, 304), wenn das Endgerät erkennt, dass sich ein Blickpunkt im ersten Bereich befindet, wobei die zweite Banner-Benachrichtigung eine erweiterte erste Banner-Benachrichtigung (301, 304) ist, und wobei ein Nachrichteninhalt in der zweiten Banner-Benachrichtigung umfangreicher ist als ein Nachrichteninhalt in der ersten Banner-Benachrichtigung (301, 304); oder
Anzeigen, durch das Endgerät, einer zweiten Schnittstelle, wenn das Endgerät erkennt, dass sich ein Blickpunkt im ersten Bereich befindet, wobei die zweite Schnittstelle eine angezeigte Schnittstelle der ersten Anwendung ist und die zweite Schnittstelle den Nachrichteninhalt in der zweiten Banner-Benachrichtigung umfasst; **gekennzeichnet durch**
Anzeigen, durch das Endgerät, eines Blickcursors (501, 601, 801, 901) auf der ersten Schnittstelle, wenn das Endgerät erkennt, dass sich der Blickpunkt in einem voreingestellten Bereich befindet, wobei der voreingestellte Bereich den ersten Bereich umfasst, der voreingestellte Bereich 1/3 der Anzeige einnimmt und der Blickcursor (501, 601, 801, 901) dazu verwendet wird, die Position des Blickpunkts auf der Anzeige anzugeben, wobei das Endgerät das Anzeigen des Blickcursors abbricht, wenn der Blickpunkt den voreingestellten Bereich verlässt, wobei das Endgerät, wenn der Blickpunkt den voreingestellten Bereich verlässt, basierend auf dem Blickstatus bestimmt, dass der Benutzer eine Banner-Benachrichtigung nicht mehr öffnen muss,
wobei ein erster Schalter (308) und ein zweiter Schalter (309) durch das Endgerät in einer dritten Schnittstelle angezeigt werden können, die den gesamten Bildschirm abdeckt; wodurch
wenn der erste Schalter (308) in einem eingeschalteten Zustand ist, erweitert das Endgerät für die erste Banner-Benachrichtigung (301, 304), die eine Erweiterung unterstützt, die erste Banner-Benachrichtigung (301, 304), wenn es erkennt, dass der Blickpunkt im ersten Bereich liegt, und wobei, wenn der zweite Schalter (309) in einem eingeschalteten Zustand ist, falls die erste Banner-Benachrichtigung (301, 304) eine Erweiterung unterstützt und falls die erste Banner-Benachrichtigung (301, 304) keine Erweiterung unterstützt, das Endgerät die erste Anwendung auf dem gesamten Bildschirm anzeigt, wenn es erkennt, dass der Blickpunkt im ersten Bereich oder einem zweiten Bereich liegt, und wobei der zweite Bereich ein Bereich ist, in dem sich die zweite Banner-Benachrichtigung befindet.

## Revendications

1. Procédé d'ouverture de notification en bannière, dans lequel le procédé comprend :
l'affichage (S1001), par un dispositif terminal, d'une première interface, dans lequel la première interface comprend une première notification en bannière (301, 304), la première notification en bannière (301, 304) se trouve dans une première région, et la première notification en bannière (301, 304) est une notification en bannière initiée par une première application ; et
l'affichage, par le dispositif terminal, d'une seconde notification en bannière sur la première interface au lieu de la première notification en bannière (301, 304) lorsque le dispositif terminal détecte qu'un point de regard se trouve dans la première région, dans lequel la seconde notification en bannière est une première notification en bannière (301, 304) étendue, et dans lequel un contenu de message dans la seconde notification en bannière est supérieur à un contenu de message dans la première notification en bannière (301, 304) ; ou
l'affichage, par le dispositif terminal, d'une deuxième interface lorsque le dispositif terminal détecte qu'un point de regard se trouve dans la première région, dans lequel la deuxième interface est une interface affichée de la première application, et la deuxième interface comprend le contenu de message dans la seconde notification en bannière ; **caractérisé par**
l'affichage, par le dispositif terminal, d'un curseur de regard (501, 601, 801, 901) sur la première interface lorsque le dispositif terminal détecte que le point de regard se trouve dans une région prédéfinie, dans lequel la région prédéfinie comprend la première région, la région prédéfinie est 1/3 de l'affichage, et le curseur de regard (501, 601, 801, 901) est utilisé pour indiquer la position du point de regard sur l'affichage, dans lequel le terminal annule l'affichage du curseur de regard lorsque le point de regard quitte la région prédéfinie, dans lequel lorsque le point de regard quitte la région prédéfinie, le terminal détermine que l'utilisateur n'a plus besoin d'ouvrir une notification en bannière sur la base de l'état du regard,
dans lequel un premier commutateur (308) et un second commutateur (309) peuvent être affichés par le dispositif terminal dans une troisième interface couvrant l'écran complet ; moyennant quoi, lorsque le premier commutateur (308) est dans un état activé, pour la première notification en bannière (301, 304) qui prend en charge l'extension, le dispositif terminal étend la première notification en bannière (301, 304) lors de la détection que le point de regard se trouve dans la première région, et moyennant quoi, lorsque le second commutateur (309) est dans un état activé, dans le cas où la première notification en bannière (301, 304) prend en charge l'extension et dans le cas où la première notification en bannière (301, 304) ne prend pas en charge l'extension, le dispositif terminal affiche la première application sur l'écran complet lors de la détection que le point de regard se trouve dans la première région ou une deuxième région, et dans lequel la deuxième région est une région dans laquelle la seconde notification en bannière est située.

2. Procédé selon la revendication 1, dans lequel le procédé comprend en outre :
l'affichage, par le dispositif terminal, de la seconde interface après l'affichage de la seconde notification par bannière sur la première interface lorsque la première notification par bannière (301, 304) prend en charge l'extension et que le dispositif terminal détecte que le point de regard se trouve dans la première région,
dans lequel l'affichage de la seconde interface après l'affichage de la seconde notification par bannière comprend : lorsque le premier commutateur (308) est activé, le second commutateur (309) est activé, la première notification par bannière (301, 304) prend en charge l'extension, et que le dispositif terminal détecte que le point de regard se trouve dans la première région, l'affichage, par le dispositif terminal, de la seconde interface après l'affichage de la seconde notification par bannière sur la première interface.

3. Le procédé selon la revendication 1 ou 2, dans lequel le procédé comprend en outre :
lorsque la durée d'affichage de la première notification par bannière (301, 304) est supérieure ou égale à une première durée, l'annulation (S1013), par le dispositif terminal, de l'affichage de la première notification par bannière (301, 304) ; ou lorsqu'une durée totale d'affichage de la première notification par bannière (301, 304) et de la seconde notification par bannière est supérieure ou égale à la première durée, l'annulation, par le dispositif terminal, de l'affichage de la seconde notification par bannière.

4. Le procédé selon la revendication 2, dans lequel l'affichage, par le dispositif terminal, de la seconde interface après l'affichage de la seconde notification par bannière sur la première interface, lorsque le dispositif terminal détecte que le point de regard se trouve dans la première région comprend :
l'affichage (S1019), par le dispositif terminal, de la seconde notification par bannière sur la première interface lorsque le dispositif terminal détecte qu'une durée pendant laquelle le point de regard se trouve dans la première région est supérieure ou égale à une deuxième durée ; et
après que le dispositif terminal affiche la seconde notification par bannière, l'affichage, par le dispositif terminal, de la seconde interface lorsque le dispositif terminal détecte qu'une durée pendant laquelle le point de regard se trouve dans la seconde région est supérieure ou égale à une septième durée.

5. Le procédé selon la revendication 4, dans lequel la septième durée comprend une troisième durée et une cinquième durée ; et
l'affichage, par le dispositif terminal, de la seconde interface lorsque le dispositif terminal détecte qu'une durée pendant laquelle le point de regard se trouve dans la seconde région est supérieure ou égale à une septième durée comprend :
lorsque le dispositif terminal détecte que la durée pendant laquelle le point de regard se trouve dans la seconde région est supérieure ou égale à la troisième durée, l'affichage (S1030), par le dispositif terminal, d'une première barre de progression à une position de départ sur un côté extérieur du curseur de regard (501, 601, 801, 901) ; et
après que le dispositif terminal a affiché la première barre de progression à la position de départ, lorsque le dispositif terminal détecte que la durée pendant laquelle le point de regard se trouve dans la deuxième région est supérieure ou égale à la cinquième durée, l'affichage, par le dispositif terminal, de la première barre de progression à une position de fin sur un côté extérieur du point de regard, et l'affichage supplémentaire (S1032) de la deuxième interface.

6. Le procédé selon la revendication 4 ou 5, dans lequel l'affichage, par le dispositif terminal, d'une deuxième notification par bannière sur la première interface lorsque le dispositif terminal détecte qu'un point de regard se trouve dans la première région comprend :
l'affichage, par le dispositif terminal, de la deuxième notification par bannière sur la première interface lorsque le premier commutateur (308) est activé, le deuxième commutateur (309) est désactivé, la première notification par bannière (301, 304) prend en charge l'extension, et le dispositif terminal détecte que le point de regard se trouve dans la première région.

7. Le procédé selon l'une quelconque des revendications 4 à 6, dans lequel l'affichage, par le dispositif terminal, d'une deuxième interface lorsque le dispositif terminal détecte qu'un point de regard se trouve dans la première région comprend :
l'affichage, par le dispositif terminal, de la deuxième interface lorsque le dispositif terminal détermine qu'une condition prédéfinie est remplie et que le dispositif terminal détecte que le point de regard se trouve dans la première région, dans lequel la condition prédéfinie comprend : que le premier commutateur (308) est désactivé, le deuxième commutateur (309) est activé, et la première notification par bannière (301, 304) prend en charge l'extension ; ou que le premier commutateur (308) est activé, le deuxième commutateur (309) est activé, et la première notification par bannière (301, 304) ne prend pas en charge l'extension ; ou que le premier commutateur (308) est désactivé, le deuxième commutateur (309) est activé, et la première notification par bannière (301, 304) ne prend pas en charge l'extension.

8. Le procédé selon la revendication 7, dans lequel l'affichage, par le dispositif terminal, de la deuxième interface lorsque le dispositif terminal détecte que le point de regard se trouve dans la première région comprend :
l'affichage, par le dispositif terminal, de la deuxième interface lorsque le dispositif terminal détecte que la durée pendant laquelle le point de regard se trouve dans la première région est supérieure ou égale à la huitième durée.

9. Le procédé selon la revendication 1, dans lequel un troisième commutateur (310) est disposé dans le dispositif terminal, le troisième commutateur (310) est configuré pour activer ou désactiver l'affichage du curseur de regard (501, 601, 801, 901), et l'affichage, par le dispositif terminal, du curseur de regard (501, 601, 801, 901) sur la première interface lorsque le dispositif terminal détecte que le point de regard se trouve dans la région prédéfinie comprend :
lorsque le dispositif terminal détecte que le point de regard se trouve dans la région prédéfinie et que le troisième commutateur (310) est activé, l'affichage, par le dispositif terminal, du curseur de regard (501, 601, 801, 901) sur la première interface.

10. Dispositif terminal, comprenant un processeur (110, 1201, 1205), dans lequel le processeur (110, 1201, 1205) est couplé à une mémoire (121, 1202), la mémoire (121, 1202) est configurée pour stocker un programme informatique, et lorsque le processeur appelle le programme informatique, le dispositif terminal est activé pour effectuer les étapes suivantes :
l'affichage, par un dispositif terminal, d'une première interface, dans lequel la première interface comprend une première notification de bannière (301, 304), la première notification de bannière (301, 304) se trouve dans une première région, et la première notification de bannière (301, 304) est une notification de bannière initiée par une première application ; et
l'affichage, par le dispositif terminal, d'une deuxième notification de bannière sur la première interface à la place de la première notification de bannière (301, 304) lorsque le dispositif terminal détecte qu'un point de regard se trouve dans la première région, dans lequel la deuxième notification de bannière est une première notification de bannière (301, 304) étendue, et dans lequel un contenu de message dans la deuxième notification de bannière est plus important qu'un contenu de message dans la première notification de bannière (301, 304) ; ou
l'affichage, par le dispositif terminal, d'une deuxième interface lorsque le dispositif terminal détecte qu'un point de regard se trouve dans la première région, dans lequel la deuxième interface est une interface affichée de la première application, et la deuxième interface comprend le contenu de message de la deuxième notification de bannière ; **caractérisé par**
l'affichage, par le dispositif terminal, d'un curseur de regard (501, 601, 801, 901) sur la première interface lorsque le dispositif terminal détecte que le point de regard se trouve dans une région prédéfinie, dans lequel la région prédéfinie comprend la première région, la région prédéfinie représente 1/3 de l'écran, et le curseur de regard (501, 601, 801, 901) est utilisé pour indiquer la position du point de regard sur l'écran, dans lequel le terminal annule l'affichage du curseur de regard lorsque le point de regard quitte la région prédéfinie, dans lequel lorsque le point de regard quitte la région prédéfinie, le terminal détermine que l'utilisateur n'a plus besoin d'ouvrir une notification de bannière sur la base de l'état du regard,
dans lequel un premier commutateur (308) et un deuxième commutateur (309) peuvent être affichés par le dispositif terminal dans une troisième interface couvrant la totalité de l'écran ; moyennant quoi
lorsque le premier commutateur (308) est à l'état activé, pour la première notification de bannière (301, 304) qui prend en charge l'extension, le dispositif terminal étend la première notification de bannière (301, 304) lorsqu'il détecte que le point de regard se trouve dans la première zone, et par lequel lorsque le second commutateur (309) est à l'état activé, au cas où la première notification de bannière (301, 304) prend en charge l'extension et au cas où la première notification de bannière (301, 304) ne prend pas en charge l'extension, le dispositif terminal affiche la première application sur l'écran complet lorsqu'il détecte que le point de regard se trouve dans la première zone ou une seconde zone, et dans laquelle la seconde zone est une zone dans laquelle la seconde notification de bannière est située.

11. Support de stockage informatique, comprenant
un programme informatique qui, lorsqu'il est exécuté par un processeur (110, 1201, 1205), amène le processeur (110, 1201, 1205) à effectuer des opérations comprenant :
l'affichage, par un dispositif terminal, d'une première interface, dans lequel la première interface comprend une première notification de bannière (301, 304), la première notification de bannière (301, 304) se trouve dans une première zone, et la première notification de bannière (301, 304) est une notification de bannière initiée par une première application ; et
l'affichage, par le dispositif terminal, d'une seconde notification de bannière sur la première interface au lieu de la première notification de bannière (301, 304) lorsque le dispositif terminal détecte qu'un point de regard se trouve dans la première zone, dans lequel la seconde notification de bannière est une première notification de bannière (301, 304) étendue, et dans lequel un contenu de message dans la seconde notification de bannière est supérieur à un contenu de message dans la première notification de bannière (301, 304) ; ou
l'affichage, par le dispositif terminal, d'une deuxième interface lorsque le dispositif terminal détecte qu'un point de regard se trouve dans la première zone, dans lequel la deuxième interface est une interface affichée de la première application, et la deuxième interface comprend le contenu du message dans la seconde notification de bannière ; **caractérisé par**
l'affichage, par le dispositif terminal, du curseur de regard (501, 601, 801, 901) sur la première interface lorsque le dispositif terminal détecte que le point de regard se trouve dans une zone prédéfinie, dans lequel la zone prédéfinie comprend la première zone, la zone prédéfinie est 1/3 de l'affichage, et le curseur de regard (501, 601, 801, 901) est utilisé pour indiquer la position du point de regard sur l'affichage, dans lequel le terminal annule l'affichage du curseur de regard lorsque le point de regard quitte la zone prédéfinie, dans lequel lorsque le point de regard quitte la zone prédéfinie, le terminal détermine que l'utilisateur n'a plus besoin d'ouvrir une notification de bannière sur la base de l'état du regard,
dans lequel un premier commutateur (308) et un second commutateur (309) peuvent être affichés par le dispositif terminal dans une troisième interface couvrant l'écran complet ; par lequel
lorsque le premier commutateur (308) est à l'état activé, pour la première notification par bannière (301, 304) qui prend en charge l'extension, le terminal déploie la première notification par bannière (301, 304) lorsqu'il détecte que le point de regard se trouve dans la première zone, et selon lequel, lorsque le second commutateur (309) est à l'état activé, dans le cas où la première notification par bannière (301, 304) prend en charge l'extension et dans le cas où la première notification par bannière (301, 304) ne prend pas en charge l'extension, le terminal affiche la première application sur l'écran complet lorsqu'il détecte que le point de regard se trouve dans la première zone ou une seconde zone, et où la seconde zone est une zone dans laquelle se trouve la seconde notification par bannière.
